# EUROPEAN PATENT APPLICATION

(11) **EP 4 838 960 A1**
(43) Date of publication of application: **11.11.2026**
(21) Application number: 25751119.6
(22) Date of filing: 16.01.2025
(51) Int. Cl.: H04W 48/10

(54) **MOBILITY MANAGEMENT METHOD, APPARATUS, AND SYSTEM**

(30) Priority: 08.02.2024 CN 202410177939
(71) Applicant: Huawei Technologies Co., Ltd., Shenzhen, Guangdong 518129 (CN)
(72) Inventor: LI, Meng, Shenzhen, Guangdong 518129 (CN); ZHU, Fangyuan, Shenzhen, Guangdong 518129 (CN); WU, Yizhuang, Shenzhen, Guangdong 518129 (CN)
(74) Representative: Maiwald GmbH
(86) International application number: PCT/CN2025/072794
(87) International publication number: WO 2025/167517

(57) **Abstract**

A mobility management method, an apparatus, and a system are disclosed, and relate to the field of wireless communication technologies. The method includes: A mobile node obtains first geographical location information, where the first geographical location information indicates a current geographical location of the mobile node; the mobile node obtains, based on the first geographical location information and a first correspondence, a cell identifier and/or a tracking area identity that correspond/corresponds to the first geographical location information; and mobile node broadcasts the cell identifier and/or the tracking area identity that correspond/corresponds to the first geographical location information.

## Description

### CROSS-REFERENCE TO RELATED APPLICATIONS

This application claims priority to Chinese Patent Application No. 202410177939.9, filed with the China National Intellectual Property Administration on February 8, 2024, and entitled "MOBILITY MANAGEMENT METHOD, APPARATUS, AND SYSTEM", which is incorporated herein by reference in its entirety.

### TECHNICAL FIELD

This application relates to the field of wireless communication technologies, and in particular, to a mobility management method, an apparatus, and a system.

### BACKGROUND

At present, a mobile base station with wireless access backhaul (mobile gNB with wireless access backhaul, MWAB) is proposed based on a vehicle-mounted scenario. An MWAB device may be deployed on a moving vehicle, and includes a base station and a terminal. The base station may be referred to as an MWAB-gNB, and the terminal may be referred to as MWAB-UE.

Due to movement of the vehicle, the MWAB-gNB and the MWAB-UE also have mobility. The MWAB-UE has a function of a common terminal device, and may access a core network over a new radio (new radio, NR). Generally, a next generation access protocol (next generation access protocol, NGAP) backhaul (backhaul) link between a radio access network device fixed on the ground and the core network may be implemented over an optical fiber, and an NGAP backhaul link between the mobile MWAB-gNB that has mobility and the core network may be implemented through a protocol data unit (protocol data unit, PDU) session between the MWAB-UE and the core network. In this way, the MWAB-gNB may provide a wireless access service for another terminal device near the vehicle.

Therefore, how to perform mobility management on the MWAB device, for example, how to update a cell identifier or a tracking area identity that corresponds to the MWAB device, is a problem that needs to be resolved currently.

### SUMMARY

Embodiments of this application provide a mobility management method, an apparatus, and a system, to implement mobility management for a mobile node that has a network access service function and mobility.

Embodiments of this application may be applied to a mobile node that has a terminal function and a base station function, and the mobile node includes a mobile node-terminal and a mobile node-base station. The mobile node-terminal has a function of a common terminal device, and may access a core network via a radio access network device. The mobile node-base station may provide a network access service for the common terminal device, and a connection (for example, an N2 connection or an N3 connection) between the common terminal device and the core network may be implemented through a session between the mobile node-terminal and the core network. For example, the mobile node may be a vehicle mounted relay (vehicle mounted relay, VMR), a wireless access and backhauling (wireless access and backhauling, WAB) node, or a mobile wireless access and backhauling (mobile wireless access and backhauling, MWAB) node.

According to a first aspect, a mobility management method is provided, applied to a mobile node. The mobile node provides a wireless access service for a terminal device, and the method includes: obtaining first geographical location information, where the first geographical location information indicates a current geographical location of the mobile node; obtaining, based on the first geographical location information and a first correspondence, a cell identifier and/or a tracking area identity that correspond/corresponds to the first geographical location information, where the first correspondence includes a correspondence between a cell identifier and geographical location information and/or includes a correspondence between a tracking area identity and the geographical location information; and broadcasting the cell identifier and/or the tracking area identity that correspond/corresponds to the first geographical location information.

In the foregoing implementation, the mobile node may obtain, based on the current first geographical location information and the first correspondence, the cell identifier and/or the tracking area identity that correspond/corresponds to the first geographical location information, and broadcast the cell identifier and/or the tracking area identity, so that information broadcast by the mobile node can be updated in a timely manner based on a current location of the mobile node, and then a terminal device (for example, a first terminal device) accessing a network via the mobile node performs, based on the updated broadcast information, procedures such as tracking area update (tracking area update, TAU), location report (location report), and AMF reallocation (AMF reallocation), thereby implementing mobility management.

In a possible implementation, broadcasting the cell identifier and/or the tracking area identity that correspond/corresponds to the first geographical location information includes: if the cell identifier corresponding to the first geographical location information is different from a cell identifier broadcast by the mobile node, updating, based on the cell identifier corresponding to the first geographical location information, the cell identifier broadcast by the mobile node; and/or if the tracking area identity corresponding to the first geographical location information is different from a tracking area identity broadcast by the mobile node, updating, based on the tracking area identity corresponding to the first geographical location information, the tracking area identity broadcast by the mobile node.

In a possible implementation, the method further includes: sending a first message to a first access and mobility management function (access and mobility management function, AMF), where the first message includes the cell identifier and/or the tracking area identity that correspond/corresponds to the first geographical location information, the first message requests to update configuration information of the mobile node, and the first AMF serves a terminal device accessing the mobile node.

In the foregoing implementation, for an AMF serving a terminal device accessing a mobile node, configuration information of the mobile node on the AMF may be updated in a timely manner, to ensure data transmission.

In a possible implementation, the first correspondence further includes a correspondence between an AMF identifier and the geographical location information, and the method further includes: obtaining, based on the first geographical location information and the first correspondence, an AMF identifier corresponding to the first geographical location information; and if the AMF identifier indicates a second AMF, a first connection has been set up between the mobile node and the first AMF, and the second AMF is different from the first AMF, sending a connection setup request message to the second AMF, where the connection setup request message requests to set up a connection between the mobile node and the second AMF, and the first AMF serves the terminal device accessing the mobile node.

In the foregoing implementation, the mobile node may obtain, based on the current first geographical location information and the first correspondence, the AMF identifier corresponding to the first geographical location information, and set up a connection between the mobile node and the AMF based on the AMF identifier, so that a connection between the mobile node and a core network can be updated in a timely manner based on a current location of the mobile node, to ensure that a transmission service is provided for a terminal device (for example, a first terminal device) accessing the mobile node. In this way, the terminal device (for example, the first terminal device) accessing a network via the mobile node performs procedures such as AMF reallocation (AMF reallocation), thereby implementing mobility management.

In a possible implementation, the method further includes: sending a connection release request message to the first AMF, where the connection release request message requests to release a connection between the mobile node and the first AMF.

In a possible implementation, the method further includes: obtaining the first correspondence from a first network element, where the first network element stores the first correspondence; or obtaining the first correspondence from a third AMF, where the third AMF is an AMF serving the mobile node.

In a possible implementation, after obtaining the first correspondence from the first network element, the method further includes: sending the first correspondence to the third AMF.

In a possible implementation, the method further includes: receiving address information of the first network element, where the address information of the first network element is from a second network element in a network to which the mobile node is registered; and obtaining the first correspondence from the first network element includes: obtaining the first correspondence from the first network element based on the address information of the first network element.

In a possible implementation, obtaining the first geographical location information includes: receiving notification information from the third AMF, where the notification information indicates the mobile node to update the broadcast cell identifier and/or the broadcast tracking area identity, and the third AMF is an AMF serving the mobile node; and obtaining the first geographical location information based on the notification information.

In the foregoing implementation, the notification information sent by the third AMF triggers the mobile node to obtain the current first geographical location information, and update the broadcast cell identifier and/or the broadcast tracking area identity, so that positioning overheads of the mobile node can be reduced, and power consumption can be reduced.

In a possible implementation, obtaining the first geographical location information includes: obtaining the first geographical location information based on a periodically initiated procedure for positioning the mobile node.

In a possible scenario, an AMF (the first AMF) serving the terminal device accessing the mobile node and an AMF (the third AMF) serving the mobile node are located in a same public land mobile network (public land mobile network, PLMN).

In another possible scenario, an AMF (the first AMF) serving the terminal device accessing the mobile node and an AMF (the third AMF) serving the mobile node are located in different PLMNs.

According to a second aspect, a mobility management method is provided. The method includes: A third AMF obtains second geographical location information, where the second geographical location information is geographical location information corresponding to a cell in which a mobile node resides, the third AMF is an AMF serving the mobile node, and the mobile node provides a wireless access service for a terminal device; the third AMF determines, based on the second geographical location information and a first correspondence, a cell identifier and/or a tracking area identity that correspond/corresponds to the second geographical location information, where the first correspondence includes a correspondence between a cell identifier and geographical location information and/or includes a correspondence between a tracking area identity and the geographical location information; and if the cell identifier corresponding to the second geographical location information is different from a cell identifier broadcast by the mobile node, the third AMF indicates the mobile node to update the broadcast cell identifier; or if the tracking area identity corresponding to the second geographical location information is different from a tracking area identity broadcast by the mobile node, the third AMF indicates the mobile node to update the broadcast tracking area identity.

In the foregoing implementation, the third AMF may trigger the mobile node to update the broadcast cell identifier and/or the broadcast tracking area identity, thereby implementing mobility management. In addition, notification information sent by the third AMF triggers the mobile node to obtain the current first geographical location information, and update the broadcast cell identifier and/or the broadcast tracking area identity, so that positioning overheads of the mobile node can be reduced, and power consumption can be reduced.

In a possible implementation, the first correspondence further includes a correspondence between an AMF identifier and the geographical location information, and the method further includes: The third AMF determines, based on the second geographical location information and the first correspondence, an AMF identifier corresponding to the second geographical location information; and if the AMF identifier corresponding to the second geographical location information is different from an identifier of a first AMF, the third AMF indicates the mobile node to update an AMF, where the first AMF serves a terminal device accessing the mobile node.

In a possible implementation, that the third AMF obtains the second geographical location information includes: The third AMF obtains, from a first radio access network device, an identifier of the cell in which the mobile node resides, where the first radio access network device is a radio access network device serving the mobile node; and the third AMF determines the geographical location information corresponding to the identifier of the cell in which the mobile node resides.

In a possible implementation, the method further includes: The third AMF obtains the first correspondence from the mobile node.

In a possible implementation, the method further includes: The third AMF sends the first correspondence to the mobile node; or the third AMF sends address information of a first network element to the mobile node, where the first network element stores the first correspondence.

In a possible scenario, an AMF (the first AMF) serving the terminal device accessing the mobile node and an AMF (the third AMF) serving the mobile node are located in a same public land mobile network (public land mobile network, PLMN).

In another possible scenario, an AMF (the first AMF) serving the terminal device accessing the mobile node and an AMF (the third AMF) serving the mobile node are located in different PLMNs.

According to a third aspect, a mobility management method is provided, applied to a mobile node. The mobile node provides a wireless access service for a terminal device, and the method includes: obtaining first geographical location information, where the first geographical location information indicates a current geographical location of the mobile node; obtaining, based on the first geographical location information and a first correspondence, an AMF identifier corresponding to the first geographical location information, where the first correspondence includes a correspondence between an AMF identifier and geographical location information; and if the AMF identifier indicates a second AMF, a first connection has been set up between the mobile node and a first AMF, and the second AMF is different from the first AMF, sending a connection setup request message to the second AMF, where the connection setup request message requests to set up a connection between the mobile node and the second AMF, and the first AMF serves a terminal device accessing the mobile node.

In the foregoing implementation, the mobile node may query the first correspondence based on the current geographical location information, to obtain the corresponding AMF identifier, and set up a connection between the mobile node-base station and the AMF based on the AMF identifier, so that a connection between the mobile node and a core network can be updated in a timely manner based on a current location of the mobile node, to ensure that a transmission service is provided for a terminal device (for example, a first terminal device) accessing the mobile node. In this way, the terminal device (for example, the first terminal device) accessing a network via the mobile node performs procedures such as AMF reallocation (AMF reallocation), thereby implementing mobility management.

In a possible implementation, the method further includes: sending a connection release request message to the first AMF, where the connection release request message requests to release a connection between the mobile node and the first AMF.

In a possible implementation, the method further includes: obtaining the first correspondence from a first network element, where the first network element stores the first correspondence; or obtaining the first correspondence from a third AMF, where the third AMF is an AMF serving the mobile node.

In a possible implementation, after obtaining the first correspondence from the first network element, the method further includes: sending the first correspondence to the third AMF.

In a possible implementation, the method further includes: receiving address information of the first network element, where the address information of the first network element is from a second network element in a network to which the mobile node is registered; and obtaining the first correspondence from the first network element includes: obtaining the first correspondence from the first network element based on the address information of the first network element.

In a possible implementation, obtaining the first geographical location information includes: receiving notification information from the third AMF, where the notification information indicates the mobile node to update an AMF, and the third AMF is an AMF serving the mobile node; and obtaining the first geographical location information based on the notification information.

In a possible implementation, obtaining the first geographical location information includes: obtaining the first geographical location information based on a periodically initiated procedure for positioning the mobile node.

According to a fourth aspect, a mobility management method is provided, including: A third AMF obtains second geographical location information, where the second geographical location information is geographical location information corresponding to a cell in which a mobile node resides, the third AMF is an AMF serving the mobile node, and the mobile node provides a wireless access service for a terminal device; the third AMF determines, based on the second geographical location information and a first correspondence, an AMF identifier corresponding to the second geographical location information, where the first correspondence includes a correspondence between an AMF identifier and geographical location information; and if the AMF identifier corresponding to the second geographical location information is different from an identifier of a first AMF, the third AMF indicates the mobile node to update an AMF, where the first AMF serves a terminal device accessing the mobile node.

In the foregoing implementation, the third AMF may trigger the mobile node to update the connected AMF, thereby implementing mobility management. In addition, notification information sent by the third AMF triggers the mobile node to obtain the current first geographical location information, and update the broadcast cell identifier and/or the broadcast tracking area identity, so that positioning overheads of the mobile node can be reduced, and power consumption can be reduced.

In a possible implementation, that the third AMF obtains the second geographical location information includes: The third AMF obtains, from a first radio access network device, an identifier of the cell in which the mobile node resides, where the first radio access network device is a radio access network device serving the mobile node; and the third AMF determines the geographical location information corresponding to the identifier of the cell in which the mobile node resides.

In a possible implementation, the method further includes: The third AMF obtains the first correspondence from the mobile node.

In a possible implementation, the method further includes: The third AMF sends the first correspondence to the mobile node; or the third AMF sends address information of a first network element to the mobile node, where the first network element stores the first correspondence.

According to a fifth aspect, a communication system is provided, including a mobile node and an AMF. The mobile node is configured to implement the method according to any implementation of the first aspect, and the AMF is configured to implement the method according to any implementation of the second aspect; or the mobile node is configured to implement the method according to any implementation of the third aspect, and the AMF is configured to implement the method according to any implementation of the fourth aspect.

According to a sixth aspect, a communication apparatus is provided, including a unit or a module configured to perform the method according to any implementation of the first aspect. Specifically, the communication apparatus includes a processing unit and a transceiver unit. The processing unit is configured to: obtain first geographical location information, where the first geographical location information indicates a current geographical location of a mobile node; obtain, based on the first geographical location information and a first correspondence, a cell identifier and/or a tracking area identity that correspond/corresponds to the first geographical location information, where the first correspondence includes a correspondence between a cell identifier and geographical location information and/or includes a correspondence between a tracking area identity and the geographical location information; and broadcast, via the transceiver unit, the cell identifier and/or the tracking area identity that correspond/corresponds to the first geographical location information.

In a possible implementation, the processing unit is specifically configured to: if the cell identifier corresponding to the first geographical location information is different from a cell identifier broadcast by the mobile node, update, via the transceiver unit, the broadcast cell identifier based on the cell identifier corresponding to the first geographical location information; and/or
if the tracking area identity corresponding to the first geographical location information is different from a tracking area identity broadcast by the mobile node, update, via the transceiver unit, the broadcast tracking area identity based on the tracking area identity corresponding to the first geographical location information.

In a possible implementation, the processing unit is further configured to send, via the transceiver unit, a first message to a first AMF, where the first message includes the cell identifier and/or the tracking area identity that correspond/corresponds to the first geographical location information, the first message requests to update configuration information of the mobile node, and the first AMF serves a terminal device accessing the mobile node.

In a possible implementation, the first correspondence further includes a correspondence between an AMF identifier and the geographical location information, and the processing unit is further configured to: obtain, based on the first geographical location information and the first correspondence, an AMF identifier corresponding to the first geographical location information; and if the AMF identifier indicates a second AMF, a first connection has been set up between the mobile node and the first AMF, and the second AMF is different from the first AMF, send, via the transceiver unit, a connection setup request message to the second AMF, where the connection setup request message requests to set up a connection between the mobile node and the second AMF, and the first AMF serves the terminal device accessing the mobile node.

In a possible implementation, the processing unit is further configured to send, via the transceiver unit, a connection release request message to the first AMF, where the connection release request message requests to release a connection between the mobile node and the first AMF.

In a possible implementation, the processing unit is further configured to: obtain, via the transceiver unit, the first correspondence from a first network element, where the first network element stores the first correspondence; or obtain, via the transceiver unit, the first correspondence from a third AMF, where the third AMF is an AMF serving the mobile node.

In a possible implementation, the processing unit is further configured to: after obtaining the first correspondence from the first network element, send, via the transceiver unit, the first correspondence to the third AMF.

In a possible implementation, the transceiver unit is further configured to receive address information of the first network element, where the address information of the first network element is from a second network element in a network to which the mobile node is registered; and the processing unit is specifically configured to obtain the first correspondence from the first network element based on the address information of the first network element.

In a possible implementation, the transceiver unit is specifically configured to receive notification information from the third AMF, where the notification information indicates the mobile node to update the broadcast cell identifier and/or the broadcast tracking area identity, and the third AMF is an AMF serving the mobile node; and the processing unit is specifically configured to obtain the first geographical location information based on the notification information.

In a possible implementation, the processing unit is specifically configured to obtain the first geographical location information based on a periodically initiated procedure for positioning the mobile node.

According to a seventh aspect, a communication apparatus is provided, including a unit or a module configured to perform the method according to any implementation of the second aspect. Specifically, the communication apparatus includes a processing unit and a transceiver unit. The processing unit is configured to: obtain second geographical location information, where the second geographical location information is geographical location information corresponding to a cell in which a mobile node resides, a third AMF is an AMF serving the mobile node, and the mobile node provides a wireless access service for a terminal device; determine, based on the second geographical location information and a first correspondence, a cell identifier and/or a tracking area identity that correspond/corresponds to the second geographical location information, where the first correspondence includes a correspondence between a cell identifier and geographical location information and/or includes a correspondence between a tracking area identity and the geographical location information; and if the cell identifier corresponding to the second geographical location information is different from a cell identifier broadcast by the mobile node, indicate, via the transceiver unit, the mobile node to update the broadcast cell identifier; or if the tracking area identity corresponding to the second geographical location information is different from a tracking area identity broadcast by the mobile node, indicate, via the transceiver unit, the mobile node to update the broadcast tracking area identity.

In a possible implementation, the first correspondence further includes a correspondence between an AMF identifier and the geographical location information, and the processing unit is further configured to: determine, based on the second geographical location information and the first correspondence, an AMF identifier corresponding to the second geographical location information; and if the AMF identifier corresponding to the second geographical location information is different from an identifier of a first AMF, indicate, via the transceiver unit, the mobile node to update an AMF, where the first AMF serves a terminal device accessing the mobile node.

In a possible implementation, the processing unit is further configured to: obtain, via the transceiver unit from a first radio access network device, an identifier of the cell in which the mobile node resides, where the first radio access network device is a radio access network device serving the mobile node; and determine, the geographical location information corresponding to the identifier of the cell in which the mobile node resides.

In a possible implementation, the processing unit is further configured to obtain, via the transceiver unit, the first correspondence from the mobile node.

In a possible implementation, the processing unit is further configured to: send, via the transceiver unit, the first correspondence to the mobile node; or send, via the transceiver unit, address information of a first network element to the mobile node, where the first network element stores the first correspondence.

According to an eighth aspect, a communication apparatus is provided, including a unit or a module configured to perform the method according to any implementation of the third aspect. Specifically, the communication apparatus includes a processing unit and a transceiver unit, applied to a mobile node, where the mobile node provides a wireless access service for a terminal device. The processing unit is configured to: obtain first geographical location information, where the first geographical location information indicates a current geographical location of the mobile node; obtain, based on the first geographical location information and a first correspondence, an access and mobility management AMF identifier corresponding to the first geographical location information, where the first correspondence includes a correspondence between an AMF identifier and geographical location information; and if the AMF identifier indicates a second AMF, a first connection has been set up between the mobile node and a first AMF, and the second AMF is different from the first AMF, send, via the transceiver unit, a connection setup request message to the second AMF, where the connection setup request message requests to set up a connection between the mobile node and the second AMF, and the first AMF serves a terminal device accessing the mobile node.

In a possible implementation, the processing unit is further configured to send, via the transceiver unit, a connection release request message to the first AMF, where the connection release request message requests to release a connection between the mobile node and the first AMF.

In a possible implementation, the processing unit is further configured to: obtain, via the transceiver unit, the first correspondence from a first network element, where the first network element stores the first correspondence; or obtain, via the transceiver unit, the first correspondence from a third AMF, where the third AMF is an AMF serving the mobile node.

In a possible implementation, the processing unit is further configured to: after obtaining the first correspondence from the first network element, send, via the transceiver unit, the first correspondence to the third AMF.

In a possible implementation, the transceiver unit is further configured to receive address information of the first network element, where the address information of the first network element is from a second network element in a network to which the mobile node is registered; and the processing unit is specifically configured to obtain, via the transceiver unit, the first correspondence from the first network element based on the address information of the first network element.

In a possible implementation, the transceiver unit is specifically configured to receive notification information from the third AMF, where the notification information indicates the mobile node to update an AMF, and the third AMF is an AMF serving the mobile node; and the processing unit is specifically configured to obtain the first geographical location information based on the notification information.

In a possible implementation, the processing unit is specifically configured to obtain the first geographical location information based on a periodically initiated procedure for positioning the mobile node.

According to a ninth aspect, a communication apparatus is provided, including a unit or a module configured to perform the method according to any implementation of the third aspect. Specifically, the communication apparatus includes a processing unit and a transceiver unit. The processing unit is configured to: obtain second geographical location information, where the second geographical location information is geographical location information corresponding to a cell in which a mobile node resides, the third AMF is an AMF serving the mobile node, and the mobile node provides a wireless access service for a terminal device; determine, based on the second geographical location information and a first correspondence, an AMF identifier corresponding to the second geographical location information, where the first correspondence includes a correspondence between an access and mobility management function AMF identifier and geographical location information; and if the AMF identifier corresponding to the second geographical location information is different from an identifier of a first AMF, indicate, via the transceiver unit, the mobile node to update an AMF, where the first AMF serves a terminal device accessing the mobile node.

In a possible implementation, the processing unit is further configured to: obtain, via the transceiver unit from a first radio access network device, an identifier of the cell in which the mobile node resides, where the first radio access network device is a radio access network device serving the mobile node; and determine, the geographical location information corresponding to the identifier of the cell in which the mobile node resides.

In a possible implementation, the processing unit is further configured to obtain, via the transceiver unit, the first correspondence from the mobile node.

In a possible implementation, the processing unit is further configured to: send, via the transceiver unit, the first correspondence to the mobile node; or send, via the transceiver unit, address information of a first network element to the mobile node, where the first network element stores the first correspondence.

According to a tenth aspect, a communication apparatus is provided, including: one or more processors configured to perform the method according to any implementation of the first aspect, or perform the method according to any implementation of the second aspect, or perform the method according to any implementation of the third aspect, or perform the method according to any implementation of the fourth aspect.

According to an eleventh aspect, a readable storage medium is provided. The readable storage medium stores a program, and when the program is executed by a communication apparatus, the method according to any implementation of the first aspect, or the method according to any implementation of the second aspect, or the method according to any implementation of the third aspect, or the method according to any implementation of the fourth aspect is implemented.

According to a twelfth aspect, a chip system is provided, including: a memory, configured to store a computer program and a processor. After the processor invokes the computer program from the memory and runs the computer program, a communication apparatus in which the chip system is installed is caused to perform the method according to any implementation of the first aspect, or perform the method according to any implementation of the second aspect, or perform the method according to any implementation of the third aspect, or perform the method according to any implementation of the fourth aspect.

According to a thirteenth aspect, a computer program product is provided. The computer program product includes instructions, and when the instructions are run on a processor, the processor is caused to perform the method according to any implementation of the first aspect, or perform the method according to any implementation of the second aspect, or perform the method according to any implementation of the third aspect, or perform the method according to any implementation of the fourth aspect.

### BRIEF DESCRIPTION OF DRAWINGS

FIG. 1 is a diagram of a 5G network architecture based on a service-oriented interface to which an embodiment of this application is applicable;
FIG. 2 is a diagram of a 5G network architecture based on a point-to-point interface to which an embodiment of this application is applicable;
FIG. 3 is a diagram of a basic architecture of an MWAB device according to an embodiment of this application;
FIG. 4 is a diagram in which a PLMN to which MWAB-UE is registered and a PLMN to which UE that has accessed via a MWAB-gNB is registered are different PLMNs according to an embodiment of this application;
FIG. 5 is a diagram of a mobile IAB architecture;
FIG. 6 is a diagram of a tracking area;
FIG. 7A and FIG. 7B are a schematic flowchart of a mobility management method according to an embodiment of this application;
FIG. 8A and FIG. 8B are a schematic flowchart of another mobility management method according to an embodiment of this application;
FIG. 9A to FIG. 9C are a schematic flowchart of another mobility management method according to an embodiment of this application;
FIG. 10A to FIG. 10C are a schematic flowchart of another mobility management method according to an embodiment of this application;
FIG. 11A to FIG. 11C are a schematic flowchart of another mobility management method according to an embodiment of this application;
FIG. 12 is a diagram of a structure of a communication apparatus according to an embodiment of this application; and
FIG. 13 is a diagram of a structure of another communication apparatus according to an embodiment of this application.

### DESCRIPTION OF EMBODIMENTS

The 3rd generation partnership project (3rd generation partnership project, 3GPP) standard group has formulated a next generation mobile communication network system (Next Generation System) architecture, which is called a 5G network architecture. The architecture supports access to a 5G core network (core network, CN) by using a radio access technology (for example, a long term evolution (long term evolution, LTE) access technology or a 5G radio access network (radio access network, RAN) access technology) defined by the 3GPP standard group, and also supports access to a core network by using a non-3GPP (non-3GPP) access technology through a non-3GPP interworking function (non-3GPP interworking function, N3IWF) or a next generation access gateway (next generation packet data gateway, ngPDG).

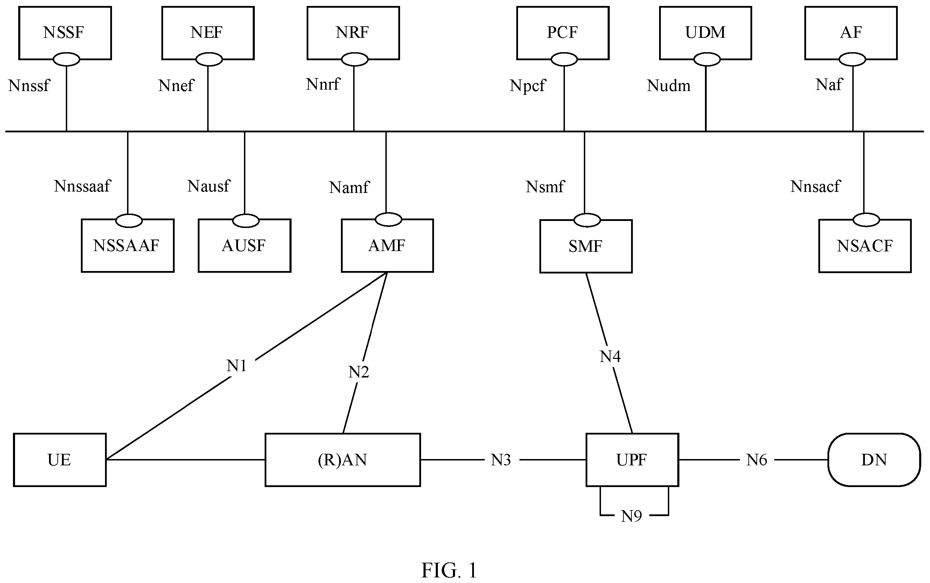

FIG. 1 is a diagram of a 5G network architecture based on a service-oriented architecture. The 5G network architecture shown in FIG. 1 may include an access network device and a core network device. The terminal device accesses a data network (data network, DN) via the access network device and the core network device. The core network device includes but is not limited to a part or all of the following network elements: an authentication server function (authentication server function, AUSF) network element, a unified data management (unified data management, UDM) network element, a unified repository (unified data repository, UDR) network element (not shown in the figure), a network repository function (network repository function, NRF) network element, a network exposure function (network exposure function, NEF) network element, a network slice selection function (network slice selection function, NSSF) network element, a network slice-specific authentication and authorization function (network slice-specific authentication and authorization function, NSSAAF) network element, a network slice admission control function (network slice admission control function, NSACF) network element, an application function (application function, AF) network element, a policy control function (policy control function, PCF) network element, an AMF network element, a session management function (session management function, SMF) network element, a user plane function (user plane function, UPF) network element, and a binding support function (binding support function, BSF) network element (not shown in the figure).

The terminal device may be user equipment (user equipment, UE), a mobile station, a mobile terminal device, or the like. The terminal device may be widely used in various scenarios, for example, device-to-device (device-to-device, D2D), vehicle to everything (vehicle to everything, V2X) communication, machine-type communication (machine-type communication, MTC), internet of things (internet of things, IoT), virtual reality, augmented reality, industrial control, self-driving, telemedicine, smart grid, smart furniture, smart office, smart wear, smart transportation, and smart city. The terminal device may be a mobile phone, a tablet computer, a computer having a wireless transceiver function, a wearable device, a vehicle, an urban air transportation means (like an uncrewed aerial vehicle or a helicopter), a ship, a robot, a mechanical arm, a smart home device, or the like.

The access network device is a device having a wireless transceiver function, and is configured to communicate with the terminal device. The access network device includes but is not limited to a base station (base transceiver station (base transceiver station, BTS), a NodeB, an eNodeB/eNB, or a gNodeB/gNB), a transmission reception point (transmission reception point, TRP), a base station evolved in a subsequent 3GPP, an access node in a Wi-Fi system, a wireless relay node, a wireless backhaul node, and the like. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller, a central unit (central unit, CU), and/or a distributed unit (distributed unit, DU) in a cloud radio access network (cloud radio access network, CRAN) scenario. Alternatively, the access network device may be a server or the like.

The access network device and the terminal device may be at fixed locations, or may be movable. The access network device and the terminal device may be deployed on land, including indoors or outdoors, or may be handheld or vehicle-mounted; or may be deployed on a water surface; or may be deployed on a plane, a balloon, or a man-made satellite in the air. Application scenarios of the access network device and the terminal device are not limited in embodiments of this application.

The AMF network element is responsible for mobility management of the UE, including mobility status management, allocation of a temporary identifier of the UE, and authentication and authorization on the UE.

The SMF network element is responsible for UPF network element selection, UPF network element reselection, IP address allocation, bearer establishment, modification, and release, and quality of service (quality of service, QoS) control.

The UPF network element supports all or a part of the following functions: interconnection between a protocol data unit (protocol data unit, PDU) session and a data network; packet routing and forwarding (for example, supporting uplink classifier (Uplink classifier) on traffic and forwarding the traffic to a data network); or data packet detection.

The UDM network element is responsible for managing subscription data, and notifying a corresponding network element when the subscription data is modified.

The Nnssf, Nnef, Nnrf, Npcf, Nudm, Naf, Nnssaaf, Nausf, Namf, Nsmf, and Nnsacf in FIG. 1 are service-oriented interfaces provided by the NSSF, the NEF, the NRF, the PCF, the UDM, the AF, the NSSAAF, the AUSF, the AMF, the SMF, and the NSACF, respectively, and are used to invoke corresponding service-oriented operations. N1, N2, N3, N4, N6, and N9 are interface sequence numbers, and meanings of these interface sequence numbers are as follows.

N1 is an interface between the AMF and the terminal device, and may be configured to transfer non-access stratum (non-access stratum, NAS) signaling (for example, including a QoS rule from the AMF) and the like to the terminal device.

N2 is an interface between the AMF and the access network device, and may be configured to transfer radio bearer control information from a core network side to the access network device, and the like.

N3 is an interface between the access network device and the UPF, and is mainly configured to transfer uplink and downlink user plane data between the access network device and the UPF.

N4 is an interface between the SMF and the UPF, and may be configured to transfer information between a control plane and a user plane, including delivery of a forwarding rule, a QoS rule, a traffic statistics rule, and the like from the control plane to the user plane, and information reporting of the user plane.

N6 is an interface between the UPF and the DN, and is configured to transfer uplink and downlink user data flows between the UPF and the DN.

N9 is a user plane interface between UPF network elements, and is for transferring uplink and downlink user data flows between the UPF network elements.

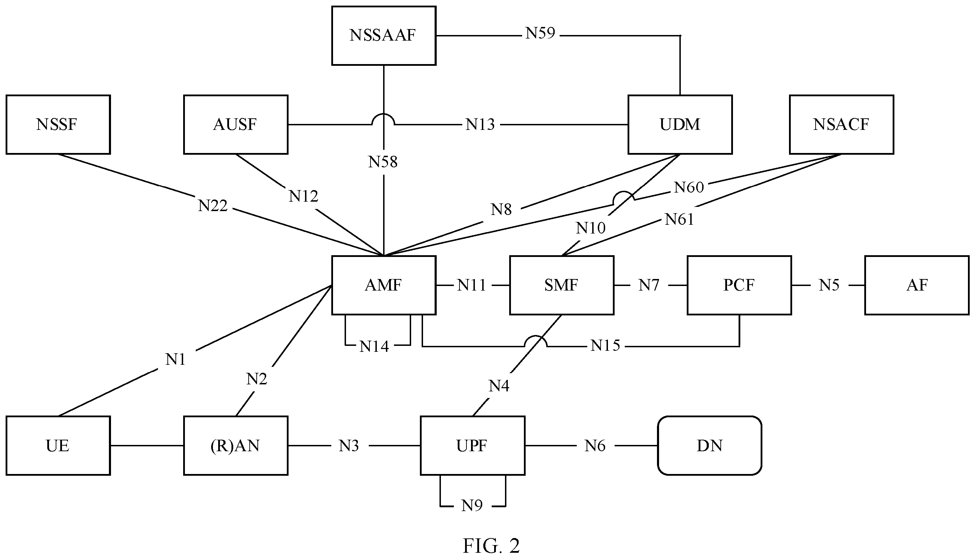

FIG. 2 is a diagram of a 5G network architecture based on a point-to-point interface. For descriptions of functions of network elements in FIG. 2, refer to the descriptions of functions of the corresponding network elements in FIG. 1. Details are not described. A main difference between FIG. 2 and FIG. 1 lies in that an interface between control plane network elements in FIG. 1 is a service-oriented interface, and an interface between control plane network elements in FIG. 2 is a point-to-point interface.

It may be understood that the foregoing network elements or functions may be network elements in a hardware device, or may be software functions running on dedicated hardware or virtualized functions instantiated on a platform (for example, a cloud platform). Optionally, the network element or function may be implemented by one device, may be jointly implemented by a plurality of devices, or may be a functional module in one device. This is not specifically limited in embodiments of this application.

The mobility management network element, the session management network element, the data management network element, and the network repository function network element in this application may be respectively an AMF network element, an SMF network element, a UDM network element, and an NRF network element in a 5G system, or may be network elements that have functions of the AMF network element, the SMF network element, the UDM network element, and the NRF network element in a future communication network. This is not limited in this application. In embodiments of this application, an example in which the AMF network element, the SMF network element, the UDM network element, and the NRF network element are respectively the mobility management network element, the session management network element, the data management network element, and the network repository function network element is used for description. In addition, the AMF network element, the SMF network element, the UDM network element, and the NRF network element are respectively referred to as an AMF, an SMF, a UDM, and an NRF for short.

For ease of description, in embodiments of this application, a specific example in which a base station and UE respectively serve as the access network device and the terminal device is used for description. A base station and UE that appear at any subsequent location may be respectively replaced with the access network device and the terminal device.

At present, a vehicle mounted relay (vehicle mounted relay, VMR) device is proposed based on a vehicle-mounted scenario. The VMR device is usually deployed on a moving vehicle. The VMR device includes a base station and UE. The UE may be referred to as VMR-UE, and the base station may be referred to as a VMR-gNB. Due to movement of the vehicle, the VMR-gNB and the VMR-UE also have mobility. The VMR-UE has a function of a common terminal device, and may access a core network through NR. Generally, an N2 backhaul (backhaul) link between a terrestrial base station fixed on the ground and the core network may be implemented over an optical fiber, and an N2 backhaul link between the VMR-gNB that has mobility and the core network may be carried on a PDU session between the VMR-UE and the core network to implement wireless backhaul. In this way, the VMR-gNB can provide wireless access for another terminal device near the vehicle. The VMR device may also be referred to as a wireless access and backhauling (wireless access and backhauling, WAB) device, UE that forms the WAB may be referred to as WAB-UE, and a base station that forms the WAB may be referred to as a WAB-gNB. Alternatively, the VMR device may also be referred to as a mobile wireless access and backhauling (mobile wireless access and backhauling, MWAB) device, UE that forms the MWAB may be referred to as MWAB-UE, and a base station that forms the MWAB may be referred to as MWAB-gNB.

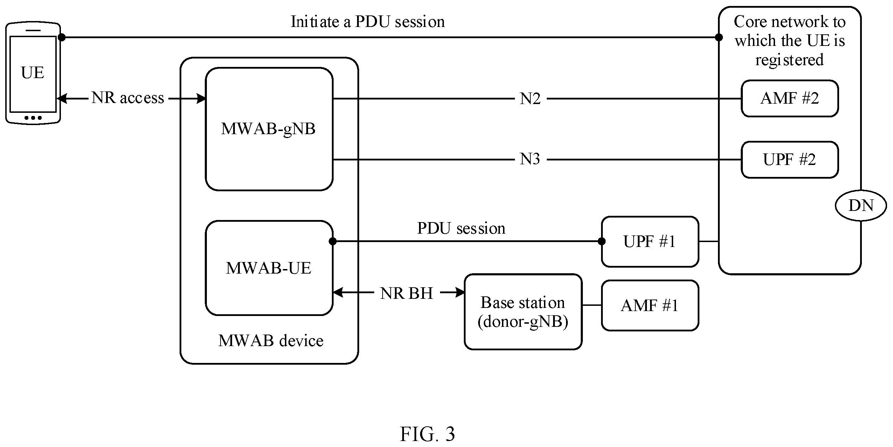

An MWAB device is used as an example. FIG. 3 is a diagram of a basic architecture of the MWAB device. MWAB-UE accesses a core network via a base station (for example, a donor-gNB) on the ground outside the vehicle, and sets up a PDU session between the MWAB-UE and a UPF (for example, a UPF #1 in the figure). The donor-gNB is also referred to as a macro base station. An N2 message between an MWAB-gNB and an AMF (for example, an AMF #2 in the figure) is transferred through the PDU session between the MWAB-UE and the UPF. For example, when the MWAB-gNB needs to send the N2 message to the AMF #2, the MWAB-gNB forwards the N2 message to the MWAB-UE through an internal interface between the MWAB-gNB and the MWAB-UE. The MWAB-UE uses the N2 message as a payload (payload) of a data packet, and transfers the N2 message to an anchor UPF (for example, the UPF #1 in the figure) of the PDU session through the PDU session that has been set up, and then the anchor UPF forwards the data packet to the AMF #2, to complete forwarding of the N2 message. An N3 message between the MWAB-gNB and the UPF (for example, a UPF #2 in the figure) is also transferred through the PDU session between the MWAB-UE and the UPF. For example, when the MWAB-gNB needs to send the N3 message to the UPF #2, the MWAB-gNB forwards the N3 message to the MWAB-UE through an internal interface between the MWAB-gNB and the MWAB-UE. The MWAB-UE uses the N3 message as a payload of a data packet, and transfers the N3 message to an anchor UPF (which may be the UPF #1 or another UPF in the figure, this is not limited in this application) of the PDU session through the PDU session that has been set up, and then the anchor UPF forwards the data packet to the UPF #2, to complete forwarding of the N3 message.

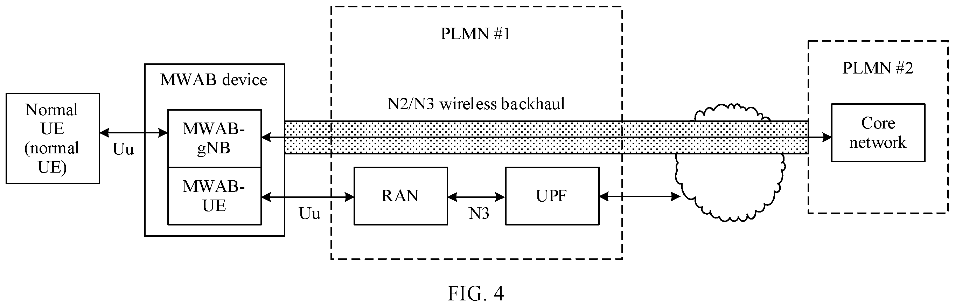

Based on the architecture of the MWAB device shown in FIG. 3, a public land mobile network (public land mobile network, PLMN) to which the MWAB-UE is registered and a PLMN to which normal UE (normal UE) is registered may be different PLMNs. As shown in FIG. 4, the MWAB-UE, as UE, is registered to a core network of a PLMN #1 and sets up a PDU session. The MWAB-gNB may set up an N2 connection to an AMF in a PLMN #2 through the PDU session of the MWAB-UE in the PLMN #1, and may set up an N3 connection to a UPF in the PLMN #2 through the PDU session of the MWAB-UE in the PLMN #1.

Based on the architecture of the MWAB device shown in FIG. 3, a PLMN to which the MWAB-UE is registered and a PLMN to which normal UE (normal UE) is registered may be the same. The MWAB-UE, as UE, is registered to a core network #1 of the PLMN and sets up a PDU session. The MWAB-gNB may set up an N2/N3 connection to a core network #2 of the PLMN through the PDU session.

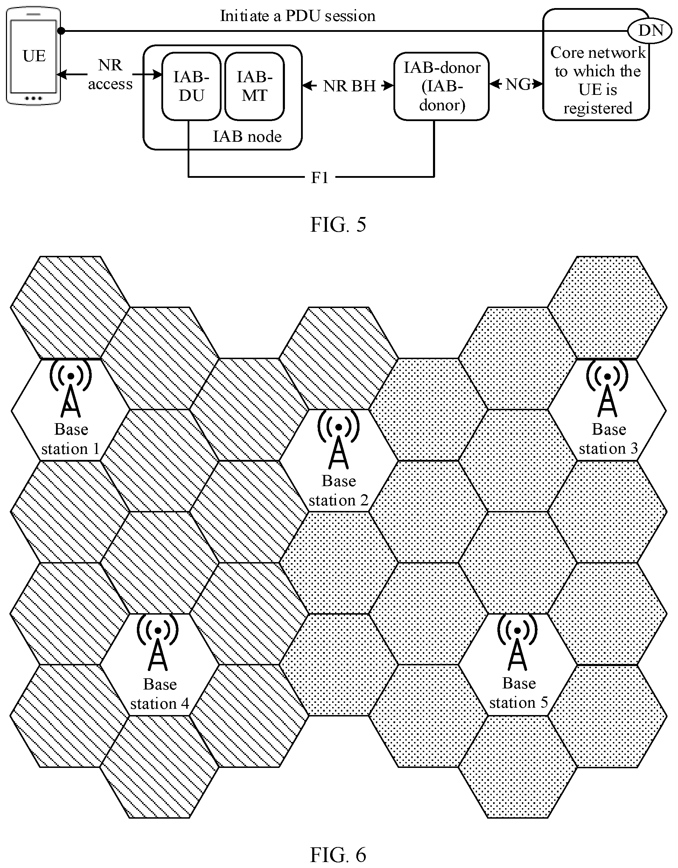

At present, a terminal device may access a network via a node that has mobility. FIG. 5 shows an example of a mobile integrated access backhaul (integrated access backhaul, IAB) architecture. An IAB node that has mobility includes an IAB-mobile terminal (mobile terminal, MT) and an IAB-distributed unit (distributed unit, DU). The IAB-MT is registered to a core network, and the core network needs to authorize a current location of the IAB-MT. If the authorization succeeds, the IAB-DU sets up an F1 connection via an IAB-Donor (IAB donor) fixed on the ground, and then the IAB-DU can provide a network access service for the UE. In a mobile scenario, if the current location of the IAB-MT does not allow the IAB node to serve the UE as a mobile IAB node due to movement of the IAB node, the core network sends a non-authorization indication (non-authorization indication) to the IAB-Donor, and the IAB-Donor releases the F1 connection to the IAB-DU.

In the architecture shown in FIG. 5, the IAB donor CU is located on the ground. Therefore, no matter how the IAB node moves, there is a fixed anchor (namely, the IAB donor CU). In this way, in a process of setting up the F1 connection between the IAB-DU and the IAB donor CU, the IAB donor CU may update information such as a tracking area code (tracking area code, TAC) and a cell identifier (cell ID) in a timely manner. However, in the MWAB architecture, the MWAB includes all functions of the base station (including functions of the CU and the DU) and is moving. When normal UE (namely, UE accessing a network via the MWAB) moves together with the MWAB, because there is no anchor on the ground, how to update, in a timely manner, a cell identifier or a tracking area identity that is broadcast by the MWAB, to perform effective mobility restriction management for the normal UE, for example, service area restriction (service area restriction, SAR), or further support requirements such as emergency services (emergency services) charging (charging), is a problem that needs to be resolved currently.

Therefore, embodiments of this application provide a mobility management method and a related apparatus that can implement the method, to implement mobility management for a mobile node that has a network access service function and mobility. The mobility management may be understood as: for the mobile node that has mobility, updating, based on a location of the mobile node, a cell identifier and/or a tracking area identity that are/is broadcast by the mobility node. The mobility management further includes: for the mobile node that has mobility, updating, based on a location of the mobile node, an AMF serving the mobile node.

The following first describes technologies and technical terms in this application.

### (1) Mobile node

The mobile node in embodiments of this application has a terminal function and a base station function. The mobile node may include a terminal and a base station. The terminal may be referred to as a mobile node-terminal or referred to as mobile node-UE, and the base station may be referred to as a mobile node-base station or referred to as a mobile node-gNB. The mobile node-terminal has a function of a common terminal device, and may access a core network via a radio access network device. The mobile node-base station may provide a network access service for the common terminal device, and a connection (for example, an N2 connection or an N3 connection) between the common terminal device and the core network may be implemented through a session between the mobile node-terminal and the core network.

In the mobile node, the mobile node-terminal and the mobile node-base station may have respective identifiers. In embodiments of this application, the identifier of the mobile node-terminal is referred to as a first identifier, and the identifier of the mobile node-base station is referred to as a second identifier. Optionally, the first identifier of the mobile node may be a generic public subscription identifier (generic public subscription identifier, GPSI), and the second identifier of the mobile node may be a gNB ID. This is not limited in this application.

An example of the mobile node may be a VMR device. Correspondingly, the mobile node-terminal is VMR-UE, and the mobile node-base station is a VMR-gNB.

Another example of the mobile node may be a WAB device. Correspondingly, the mobile node-terminal is WAB-UE, and the mobile node-base station is a WAB-gNB.

Another example of the mobile node may be an MWAB device. Correspondingly, the mobile node-terminal is MWAB-UE, and the mobile node-base station is an MWAB-gNB.

### (2) First connection and second connection

In embodiments of this application, a mobile node-base station may provide a wireless access service for a surrounding terminal device, and the terminal device may access a core network via the mobile node-base station. A connection may be set up between the mobile node-base station and the core network, to carry signaling and/or data transmission between a terminal device that has accessed via the mobile node-base station and the core network.

The connection set up between the mobile node-base station and the core network includes the first connection. The first connection is also referred to as an N2 connection or an NGAP connection, and is a connection between the mobile node-base station and an AMF, or there is an N2 interface between the mobile node-base station and the AMF. The first connection may carry signaling transmission between the terminal device that has accessed via the mobile node-base station and the core network.

The mobile node-base station may send a connection setup request message (for example, an NG Setup request) to the AMF, to request to set up the first connection. The connection setup request message may be used to transmit application layer information used for an NG-C interface instance. In a process of setting up the first connection, application-level data required for correct interoperability between the mobile node-base station and the AMF on an NG-C interface may be exchanged between the mobile node-base station and the AMF. Setting up the first connection between the mobile node-base station and the AMF may also be understood as setting up context between the mobile node-base station and the AMF, or exchanging application layer information between the mobile node-base station and the AMF.

The connection set up between the mobile node-base station and the core network further includes the second connection. The second connection is also referred to as an N3 connection, and is a connection between the mobile node-base station and a UPF, or there is an N3 interface between the mobile node-base station and the UPF. The second connection may carry data transmission between the terminal device that has accessed via the mobile node-base station and the core network.

### (3) First session and second session

In embodiments of this application, a mobile node-terminal may be registered to a core network as a terminal device. For example, MWAB-UE may be registered to an AMF as common UE. A session may be set up between the mobile node-terminal and the core network to which the mobile node-terminal is registered. The session may be a session between the mobile node-terminal and a UPF, and the UPF may be referred to as an anchor UPF of the session. A 5G core network is used as an example. The session may be a PDU session.

The session between the mobile node-terminal and the core network may be used as a backhaul link for the first connection and/or the second connection.

In embodiments of this application, the session set up between the mobile node-terminal and the core network may include the first session, and the first session is a backhaul link for the first connection. It may also be understood that the first session is used for wireless backhauling of the first connection. For example, the first session is a first PDU session, and the first PDU session is used for wireless backhauling of an N2 connection (PDU session for wireless backhauling of the N2). Alternatively, it may be understood that the first session carries a backhaul link for the first connection. Alternatively, the first session may be referred to as a PDU session for wireless backhauling or a PDU session for wireless backhauling of the N2/N3.

For example, a mobile node-base station forwards an N2 message to the mobile node-terminal through an internal interface between the mobile node-base station and the mobile node-terminal. The mobile node-terminal transfers the N2 message as a payload of a data packet to an anchor UPF of the session through the first session, and then the anchor UPF forwards the data packet to the AMF accessed by the terminal device (the terminal device accesses the core network via the mobile node-base station), to complete transmission of the N2 message.

In embodiments of this application, the session set up between the mobile node-terminal and the core network may include the second session, and the second session is a backhaul link for the second connection. It may also be understood that the second session is used for wireless backhauling of the second connection. For example, the second session is a second PDU session, and the second PDU session is used for wireless backhauling of an N3 connection (PDU session for wireless backhauling of the N3). Alternatively, it may be understood that the second session carries a backhaul link for the second connection. Alternatively, the second session may be referred to as a PDU session for wireless backhauling or a PDU session for wireless backhauling of the N2/N3.

For example, the mobile node-base station forwards an N3 message to the mobile node-terminal through an internal interface between the mobile node-base station and the mobile node-terminal. The mobile node-terminal transfers the N3 message as a payload of a data packet to an anchor UPF of the session through the second session, and then the anchor UPF forwards the data packet to the UPF accessed by the terminal device (the terminal device accesses the core network via the mobile node-base station), to complete transmission of the N3 message.

In a possible case, the anchor UPF of the first session is different from the anchor UPF of the second session, the first session is used as a transmission link for the first connection, and the second session is used as the backhaul link for the second connection. In another possible case, the anchor UPF of the first session is the same as the anchor UPF of the second session, the first session is used as a transmission link for the first connection, and the second session is used as the backhaul link for the second connection. In another possible case, the first session and the second session are a same session. In other words, the mobile node-terminal may set up a session as a backhaul link for the first connection and the second connection.

### (4) Tracking area (tracking area, TA)

The TA is a concept set in 3GPP for location management of a terminal device. One TA corresponds to one tracking area code (tracking area code, TAC). Each TA has one unique identifier, that is, a tracking area identity (tracking area identity, TAI). The TAI includes one TAC, one mobile country code (mobile country code, MCC), and one mobile network code (mobile network code, MNC). A plurality of TAs can form a tracking area list (tracking area list, TAL).

FIG. 6 is an example of a diagram of the TA. Based on coverage of an antenna, each base station may be divided into a plurality of sectors, and each sector may be divided into a plurality of cells. One cell can belong to only one TA, different cells in one base station may belong to different TAs, and cells included in one TA may belong to different base stations. In an example in FIG. 5, each hexagon represents one TA, a plurality of TAs filled with dot patterns form one tracking area list, and a plurality of TAs filled with right oblique patterns form another tracking area list.

In this embodiment of this application, the mobile node stores a first correspondence. The first correspondence may be stored in any storage area, in the mobile node, that can be accessed by the mobile node-terminal. For example, the first correspondence may be stored in a memory in the mobile node-terminal. In another possible implementation, the first correspondence is separately stored in the mobile node and an AMF serving the mobile node.

The first correspondence includes one or more of the following correspondences:
a correspondence between a cell identifier and geographical location information;
a correspondence between a tracking area identity and the geographical location information; and
a correspondence between an AMF identifier and the geographical location information.

The geographical location information in the first correspondence may be information about a geographical area, or positioning system coordinate information, or address information (for example, a street name), or a zip code (zip code), or other information that may be used to describe the geographical area. This is not limited in this application.

The cell identifier in the first correspondence may be a cell ID, an NR cell global identifier (NR cell global identifier, NCGI), a physical cell identifier (physical cell ID, PCI), or the like. This is not limited in this application.

The tracking area identity in the first correspondence may be a TAI or a TAC. This is not limited in this application.

The AMF identifier in the first correspondence may be an AMF ID, for example, may be a fully qualified domain name (fully qualified domain name, FQDN), for example, myhost.example.com. Alternatively, the AMF ID may be an IP address, or may be a character string including digits and letters (for example, 4e0b2760-0356-42c4-b739-8d6aaa491b63), or may be a universally unique identifier (universally unique identifier, UUID). This is not limited in this application.

For example, the first correspondence includes the correspondence between the cell identifier and the geographical location information, the correspondence between the tracking area identity and the geographical location information, and the correspondence between the AMF identifier and the geographical location information. The first correspondence may be presented as a list of correspondences between cell identifiers and geographic locations, a list of correspondences between tracking area identities and the geographical location information, and a list of correspondences between AMF identifiers and the geographical location information.

For example, Table 1 shows a data structure of the list of correspondences between cell identifiers and geographical locations.

**Table 1: List of correspondences between cell identifiers and geographical locations**

| Cell identifier | Geographical location information |
|---|---|
| cell ID #1 | Geographic area #1 |
| cell ID #2 | Geographic area #2 |
| ... | ... |

The list of correspondences between cell identifiers and geographical locations may include one or more cell identifiers and geographical areas respectively corresponding to the one or more cell identifiers.

For example, Table 2 shows a data structure of the list of correspondences between tracking area identities and the geographical location information.

**Table 2: List of correspondences between tracking area identities and geographical locations**

| Tracking area identity | Geographical location information |
|---|---|
| TAC #1 | Geographic area #1 |
| TAC #2 | Geographic area #2 |
| ... | ... |

The list of correspondences between tracking area identities and geographical locations may include one or more tracking area identities and geographical areas respectively corresponding to the one or more tracking area identities.

For example, Table 3 shows a data structure of the list of correspondences between AMF identifiers and the geographical location information.

**Table 3: List of correspondences between AMF identifiers and geographical locations**

| AMF identifier | Geographical location information |
|---|---|
| AMF ID #1 | Geographic area #1 |
| AMF ID #2 | Geographic area #2 |
| ... | ... |

The list of correspondences between AMF identifiers and geographical locations may include one or more AMF identifiers and geographical areas respectively corresponding to the one or more AMF identifiers.

It should be understood that a data structure of the first correspondence is not limited in embodiments of this application.

For example, Table 4 shows another data structure of a list of correspondences between geographic locations and cell identifiers, tracking area identities, and AMF identifiers.

**Table 4: List of correspondences between geographic locations and cell identifiers, tracking area identities, and AMF identifiers**

| Cell identifier | Tracking area identity | AMF identifier | Geographical location information |
|---|---|---|---|
| cell ID #1 | TAC #1 | AMF ID #1 | Geographic area #1 |
| cell ID #2 | TAC #1 | AMF ID #1 | Geographic area #2 |
| cell ID #3 | TAC #2 | AMF ID #1 | Geographic area #3 |
| cell ID #4 | TAC #3 | AMF ID #2 | Geographic area #4 |
| ... | ... | ... | ... |

It should be noted that the foregoing correspondence list may include one entry (entry), or may include a plurality of entries. Then, updating may be performed by the mobile node or another network element or system.

In a possible implementation, the first correspondence stored in the mobile node and the first correspondence stored in the AMF serving the mobile node are related to a moving route of the mobile node. For example, the mobile node is an MWAB device on a vehicle that has a fixed running route. A cell identifier and a tracking area identity in a first correspondence stored in the MWAB device are a cell identifier and a tracking area identity of an access network device deployed by a network operator to which the MWAB device subscribes on the running route of the MWAB device.

In this embodiment of this application, the mobile node may obtain the first correspondence in the following several manners:

Manner 1-1: The first correspondence is preconfigured in a core network, and the first correspondence may be obtained in a process in which the mobile node is registered to the core network.

For example, the first correspondence may be preconfigured in a network element, for example, an AMF, a PCF, or a UDM in the core network. In the process in which the mobile node is registered to the core network, the network element in the core network sends necessary information for access to the mobile node, where the necessary information includes the first correspondence. In an implementation, the network element in the core network sends the necessary information for access to the mobile node-terminal, and the mobile node-terminal may send the first correspondence to the mobile node-base station through an internal interface between the mobile node-terminal and the mobile node-base station.

It should be understood that the information exchange manner between the mobile node-terminal and the mobile node-base station may alternatively be another manner, for example, a memory sharing manner. This is not limited in this application.

For example, a mobile node that has a fixed running route is used as an example. A first correspondence corresponding to the mobile node may be configured based on the running route of the mobile node, and the first correspondence is configured in the foregoing network element in the core network.

Manner 1-2: Address information of a first network element is preconfigured in a core network, and the first network element stores the first correspondence. In a process in which the mobile node is registered to the core network, the address information of the first network element may be obtained, and the first correspondence may be obtained from the first network element based on the address information of the first network element.

For example, the address information of the first network element may be preconfigured in a network element, for example, an AMF, a PCF, or a UDM in the core network. In the process in which the mobile node is registered to the core network, the network element in the core network sends necessary information for access to the mobile node, where the necessary information includes the address information of the first network element. The mobile node may obtain the first correspondence from the first network element based on the address information of the first network element. In an implementation, the network element in the core network sends necessary information for access to the mobile node-terminal, where the necessary information includes the address information of the first network element. The mobile node-terminal may obtain the first correspondence from the first network element based on the address information of the first network element. The mobile node-terminal may send the first correspondence to the mobile node-base station through an internal interface between the mobile node-terminal and the mobile node-base station.

The first network element may be a network element in an (operations, administration, and management (operations, administration, and management, OAM)) system, or another network element that stores the first correspondence, or the first network element may be understood as an OAM system. This is not limited in this application.

Optionally, the address information of the first network element may be an FQDN, an IP address, a character string including digits and letters (for example, 4e0b2760-0356-42c4-b739-8d6aaa491b63), or a universally unique identifier (Universally Unique Identifier, UUID). This is not limited in this application.

Optionally, the address information of the first network element may be configured in the network element, for example, the AMF, the PCF, or the UDM in the core network. This is not limited in this application.

Manner 1-3: When the AMF serving the mobile node stores the first correspondence, the AMF may send the first correspondence to the mobile node. For example, after the mobile node initiates a registration request to the AMF, the AMF may send the first correspondence to the mobile node.

It should be understood that the foregoing merely lists several possible implementations in which the mobile node obtains the first correspondence as an example. This is not limited in this application.

In this embodiment of this application, the AMF may obtain the first correspondence in the following several manners:
Manner 2-1: The first correspondence is preconfigured in a core network, and the AMF may obtain the first correspondence in a process in which the mobile node is registered to the core network.

For example, the first correspondence may be preconfigured in a PCF or a UDM in the core network. If the first correspondence is configured in the PCF or the UDM, the AMF may obtain the first correspondence from the PCF or the UDM.

Manner 2-2: Address information of a first network element is preconfigured in a core network, and the AMF may obtain the first correspondence from the first network element based on the address information of the first network element.

For example, after the mobile node initiates a registration request to the AMF, the AMF may obtain the address information of the first network element, and may obtain the first correspondence from the first network element based on the address information of the first network element.

For example, subscription information of the mobile node may include a first correspondence matching a running route of the mobile node. After receiving the registration request message of the mobile node, the AMF may obtain the subscription information of the mobile node from a UDM, where the subscription information includes address information of an OAM. The AMF may send a request message to the OAM based on the address information of the OAM, where the request message requests to obtain the first correspondence. The OAM may send the first correspondence to the AMF based on the request message.

Manner 2-3: When the mobile node stores the first correspondence, the mobile node may send the first correspondence to the AMF serving the mobile node.

It should be understood that the foregoing merely lists several possible implementations in which the AMF obtains the first correspondence as an example. This is not limited in this application.

The following describes embodiments of this application with reference to the accompanying drawings.

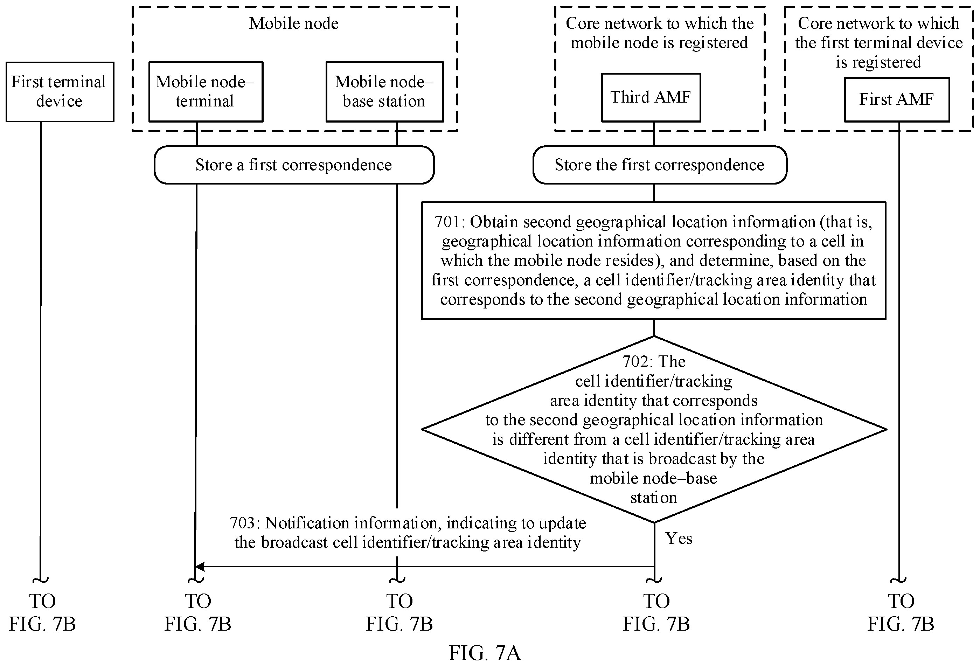

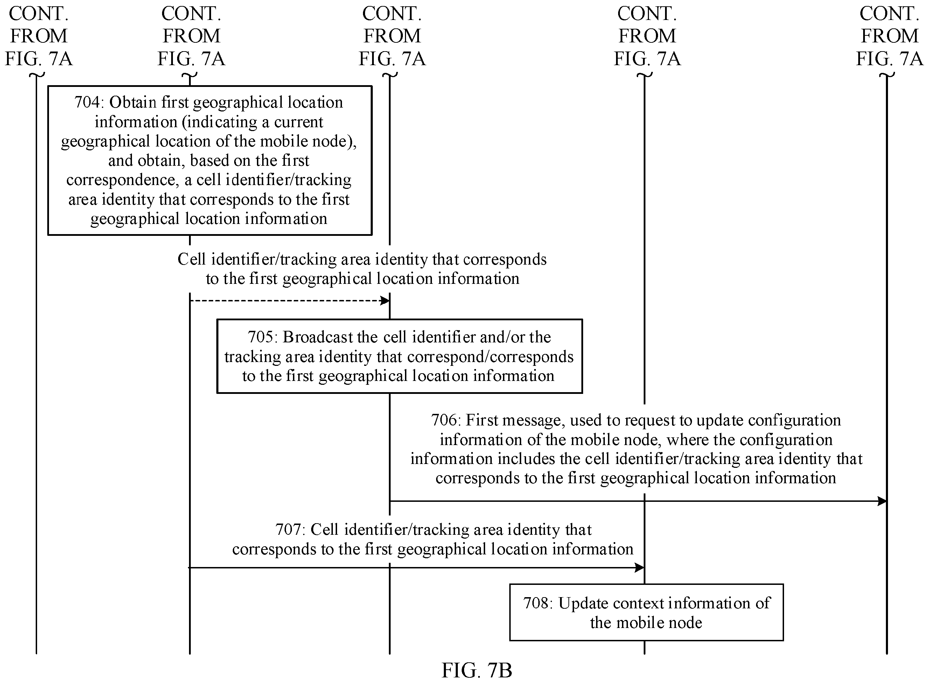

FIG. 7A and FIG. 7B are a schematic flowchart of a mobility management method according to an embodiment of this application. In the method, a mobile node-terminal has been registered to a third AMF, and the third AMF is an AMF serving the mobile node-terminal. A first session has been set up between the mobile node-terminal and a UPF (not shown in the figure) in a core network to which the mobile node is registered. A first connection has been set up between a mobile node-base station and a first AMF. The mobile node-base station may provide a network access service for a first terminal device. A first terminal device that has accessed may communicate with the first AMF based on the first connection. In other words, the first AMF may be configured to serve a first terminal device accessing the mobile node-base station. The first session is a backhaul link for the first connection.

A mobile node and the third AMF store a first correspondence. For a manner in which the mobile node and the third AMF obtain the first correspondence and content included in the first correspondence, refer to the related content in the foregoing embodiment.

As shown in FIG. 7A and FIG. 7B, the procedure may include the following steps.

Step 701: The third AMF obtains second geographical location information, and determines, based on the first correspondence, a cell identifier/tracking area identity that corresponds to the second geographical location information. The second geographical location information is geographical location information corresponding to a cell in which the mobile node resides.

In a possible implementation, the third AMF may obtain, from a first RAN, an identifier of the cell in which the mobile node resides, where the first RAN is a radio access network device serving the mobile node. After obtaining the identifier of the cell in which the mobile node resides, the third AMF may determine, based on the identifier of the cell, geographical location information of the mobile node. The third AMF may use the geographical location information as the second geographical location information, and query the first correspondence based on the second geographical location information, to obtain the cell identifier and/or the tracking area identity that correspond/corresponds to the second geographical location information.

In a possible implementation, the third AMF may subscribe to an identifier of a cell in which the mobile node-terminal resides. In other words, after the mobile node-terminal resides in a new cell, the third AMF may obtain, from a RAN currently serving the mobile node-terminal, the identifier of the cell in which the mobile node-terminal currently resides.

Optionally, the third AMF may determine, based on subscription information of the mobile node, whether to subscribe to the identifier of the cell in which the mobile node-terminal resides. For example, if the subscription information of the mobile node indicates that the identifier of the cell in which the mobile node-terminal resides needs to be subscribed to, or the subscription information indicates that an activity range of the mobile node may exceed a range of one cell or one tracking area, or exceeds a range corresponding to one AMF, the third AMF determines that the identifier of the cell in which the mobile node-terminal resides needs to be subscribed to.

It should be understood that "determining, based on the first correspondence, the cell identifier/tracking area identity that corresponds to the second geographical location information" may include the following several cases:
Case 1: If the first correspondence includes a correspondence between a cell identifier and geographical location information, the cell identifier corresponding to the second geographical location information is determined based on the first correspondence.
Case 2: If the first correspondence includes a correspondence between a tracking area identity and the geographical location information, the tracking area identity corresponding to the second geographical location information is determined based on the first correspondence.
Case 3: If the first correspondence includes a correspondence between a cell identifier and geographical location information, and a correspondence between a tracking area identity and the geographical location information, the cell identifier and the tracking area identity that correspond to the second geographical location information are determined based on the first correspondence.

Step 702: If the third AMF determines that the cell identifier/tracking area identity that corresponds to the second geographical location information is different from a cell identifier/tracking area identity that is broadcast by the mobile node-base station, step 703 is performed.

In a possible case, that the cell identifier/tracking area identity that corresponds to the second geographical location information is different from the cell identifier/tracking area identity that is broadcast by the mobile node-base station may include the following cases:
Case 1: The cell identifier corresponding to the second geographical location information queried based on the first correspondence is different from the cell identifier broadcast by the mobile node-base station.
Case 2: The tracking area identity corresponding to the second geographical location information queried based on the first correspondence is different from the tracking area identity broadcast by the mobile node-base station.
Case 3: The cell identifier corresponding to the second geographical location information queried based on the first correspondence is different from the cell identifier broadcast by the mobile node-base station, and the tracking area identity corresponding to the second geographical location information queried based on the first correspondence is different from the tracking area identity broadcast by the mobile node-base station.

Step 703: The third AMF sends notification information to the mobile node (for example, the mobile node-terminal or the mobile node-base station), where the notification information indicates or prompts the mobile node-terminal to obtain current geographical location information, or indicates or prompts the mobile node to update the broadcast cell identifier/tracking area identity.

The notification information may also be understood as being used to trigger the mobile node-terminal to obtain the current geographical location information, so as to trigger the mobile node-terminal to update, based on obtained first geographical location information, the cell identifier and/or the tracking area identity that are/is broadcast by the mobile node-base station.

For example, if the cell identifier corresponding to the second geographical location information is different from the cell identifier broadcast by the mobile node-base station, the notification information indicates or prompts the mobile node-base station to update the broadcast cell identifier.

For example, if the tracking area identity corresponding to the second geographical location information is different from the tracking area identity broadcast by the mobile node-base station, the notification information indicates or prompts the mobile node-base station to update the broadcast tracking area identity.

For example, if the cell identifier corresponding to the second geographical location information is different from the cell identifier broadcast by the mobile node-base station, and the tracking area identity corresponding to the second geographical location information is different from the tracking area identity broadcast by the mobile node-base station, the notification information indicates or prompts the mobile node-base station to update the broadcast cell identifier and tracking area identity.

In a possible implementation, the third AMF sends first notification information to the mobile node-base station, where the first notification information indicates or prompts the mobile node-base station to update broadcast information (for example, including the cell identifier and/or the tracking area identity); and the mobile node-base station may send second notification information to the mobile node-terminal through an internal interface between the mobile node-base station and the mobile node-terminal, where the second notification information indicates or prompts the mobile node-terminal to obtain the current geographical location information, and obtain, based on the first correspondence, the cell identifier and/or the tracking area identity that correspond/corresponds to the current geographical location information.

It should be understood that the information exchange manner between the mobile node-terminal and the mobile node-base station may alternatively be another manner, for example, a memory sharing manner. This is not limited in this application.

Step 704: The mobile node (mobile node-terminal) obtains the first geographical location information, and obtains, based on the first correspondence, a cell identifier/tracking area identity that corresponds to the first geographical location information. The first geographical location information indicates a current geographical location of the mobile node (mobile node-terminal).

The mobile node-terminal may obtain the first geographical location information by initiating a positioning procedure (for example, the mobile node-terminal sends a positioning request message to a location management function (location management function, LMF), to obtain the first geographical location information), or obtain the first geographical location information by using a global navigation satellite system (global navigation satellite system, GNSS, also referred to as a global navigation satellite system) function of the mobile node. This is not limited in this application.

It should be understood that "obtaining, based on the first correspondence, the cell identifier/tracking area identity that corresponds to the first geographical location information" may include the following cases:
Case 1: If the first correspondence includes a correspondence between a cell identifier and geographical location information, the cell identifier corresponding to the first geographical location information is obtained based on the first correspondence.
Case 2: If the first correspondence includes a correspondence between a tracking area identity and the geographical location information, the tracking area identity corresponding to the first geographical location information is obtained based on the first correspondence.
Case 3: If the first correspondence includes a correspondence between a cell identifier and geographical location information, and a correspondence between a tracking area identity and the geographical location information, the cell identifier and the tracking area identity that correspond to the first geographical location information are obtained based on the first correspondence.

Step 705: After obtaining, through the internal interface or in another manner, the cell identifier/tracking area identity that corresponds to the first geographical location information, the mobile node-base station broadcasts the cell identifier/tracking area identity that corresponds to the first geographical location information.

Optionally, the mobile node-base station may broadcast a message in the cell. For example, a system information block (system information block, SIB) includes the cell identifier and/or the tracking area identity that correspond/corresponds to the first geographical location information.

In a possible implementation, before updating the broadcast cell identifier/tracking area identity, the mobile node-base station may determine whether the cell identifier/tracking area identity that corresponds to the first geographical location information is the same as the currently broadcast cell identifier/tracking area identity, and if the cell identifier/tracking area identity that corresponds to the first geographical location information is different from the currently broadcast cell identifier/tracking area identity, update the broadcast cell identifier/tracking area identity.

In another possible implementation, before the mobile node-base station updates the broadcast cell identifier/tracking area identity, the mobile node-terminal may determine whether the cell identifier/tracking area identity that corresponds to the first geographical location information is the same as the cell identifier/tracking area identity that is currently broadcast by the mobile node-base station. If the cell identifier/tracking area identity that corresponds to the first geographical location information is different from the cell identifier/tracking area identity that is currently broadcast by the mobile node-base station, the mobile node-terminal sends the to-be-updated broadcast cell identifier/tracking area identity to the mobile node-base station. In a possible implementation, the mobile node-terminal may send, to the mobile node-base station through the internal interface between the mobile node-terminal and the mobile node-base station, the cell identifier/tracking area identity that corresponds to the first geographical location information. The mobile node-terminal may obtain, through the internal interface or in another manner, the cell identifier/tracking area identity that is currently broadcast by the mobile node-base station.

Optionally, before the mobile node-terminal sends the cell identifier/tracking area identity that corresponds to the first geographical location information to the mobile node-base station, the mobile node-terminal may further determine whether the cell identifier/tracking area identity that corresponds to the first geographical location information is the same as the cell identifier/tracking area identity that is broadcast by the mobile node-base station, and if the cell identifier/tracking area identity that corresponds to the first geographical location information is different from the cell identifier/tracking area identity that is broadcast by the mobile node-base station, send the cell identifier/tracking area identity that corresponds to the first geographical location information to the mobile node-base station. The mobile node-terminal may obtain, through the internal interface or in another manner, the cell identifier/tracking area identity that is currently broadcast by the mobile node-base station.

It should be understood that, that the cell identifier/tracking area identity that corresponds to the first geographical location information is different from the cell identifier/tracking area identity that is broadcast by the mobile node-base station may include the following cases:
Case 1: The cell identifier corresponding to the first geographical location information is different from the cell identifier broadcast by the mobile node-base station.
Case 2: The tracking area identity corresponding to the first geographical location information is different from the tracking area identity broadcast by the mobile node-base station.
Case 3: The cell identifier corresponding to the first geographical location information is different from the cell identifier broadcast by the mobile node-base station, and the tracking area identity corresponding to the second geographical location information is different from the tracking area identity broadcast by the mobile node-base station.

It should be understood that the information exchange manner between the mobile node-terminal and the mobile node-base station may alternatively be another manner, for example, a memory sharing manner. This is not limited in this application.

In a possible implementation, the procedure shown in FIG. 7A and FIG. 7B may further include the following step.

Step 706: The mobile node (mobile node-base station) sends a first message to the first AMF, where the first message requests to update configuration information of the mobile node (mobile node-base station), and the first message includes the cell identifier and/or the tracking area identity that correspond/corresponds to the first geographical location information.

For example, the mobile node-base station may send an NGAP update request message or a RAN Configuration Update message to the first AMF. The message includes information such as the cell identifier and the tracking area identity that are currently broadcast by the mobile node-base station. The cell identifier and the tracking area identity that are currently broadcast by the mobile node-base station are the cell identifier and the tracking area identity that correspond to the first geographical location information.

Optionally, the first AMF may further send an NGAP update response message or a RAN CONFIGURATION UPDATE ACKNOWLEDGE message to the mobile node-base station, where the message acknowledges configuration update.

In a possible implementation, the procedure shown in FIG. 7A and FIG. 7B may further include the following steps.

Step 707: The mobile node (for example, the mobile node-terminal, or the mobile node-base station) sends the cell identifier/tracking area identity that corresponds to the first geographical location information to the third AMF.

Step 708: The third AMF updates context information of the mobile node based on the cell identifier/tracking area identity that corresponds to the first geographic location area.

In a possible implementation, step 701 to step 703 in the procedure shown in FIG. 7A and FIG. 7B may be omitted. Correspondingly, in step 704, the mobile node-terminal may trigger to obtain the geographical location information of the mobile node-terminal in another manner. For example, the geographical location information of the mobile node-terminal is obtained by periodically initiating a positioning procedure, or the geographical location information of the mobile node-terminal is obtained by periodically using a GNSS of the mobile node-terminal. This is not limited in this application. Correspondingly, the third AMF may not need to store the first correspondence.

In a possible implementation, the mobile node (for example, the mobile node-terminal) may obtain the first correspondence from the first network element based on a specified period, and update the locally stored first correspondence in a timely manner. Further, the mobile node may further send the updated first correspondence to the AMF serving the mobile node.

In another possible implementation, the AMF serving the mobile node may obtain the first correspondence from the first network element based on a specified period, and update the locally stored first correspondence in a timely manner. Further, the AMF may send the updated first correspondence to the mobile node.

In still another possible implementation, the mobile node (for example, the mobile node-terminal) may obtain the first correspondence from the first network element when the stored first correspondence cannot cover a current geographical location of the mobile node.

Based on the procedure shown in FIG. 7A and FIG. 7B, in a possible scenario, an AMF (the first AMF) serving the first terminal device accessing the mobile node and an AMF (the third AMF) serving the mobile node are located in a same PLMN. In another possible scenario, an AMF (the first AMF) serving the first terminal device accessing the mobile node and an AMF (the third AMF) serving the mobile node are located in different PLMNs.

Based on the procedure shown in FIG. 7A and FIG. 7B, the mobile node may query the first correspondence based on the current geographical location information, to obtain the corresponding cell identifier and/or the corresponding tracking area identity, and update, based on the cell identifier and/or the tracking area identity, the cell identifier and/or the tracking area identity that are/is broadcast by the mobile node, so that information broadcast by the mobile node can be updated in a timely manner based on a current location of the mobile node, and then a terminal device (for example, the first terminal device) accessing a network via the mobile node performs, based on the updated broadcast information, procedures such as tracking area update (tracking area update, TAU), location report (location report), and AMF reallocation (AMF reallocation), thereby implementing mobility management.

Further, after determining that the cell in which the mobile node resides changes, the AMF (for example, the third AMF) serving the mobile node may trigger the mobile node to update, based on the current geographical location information and the first correspondence, the information broadcast by the mobile node. Compared with that the mobile node periodically performs the positioning procedure to obtain the current geographical location information, this can reduce positioning costs of the mobile node, reduce signaling overheads, and reduce power consumption.

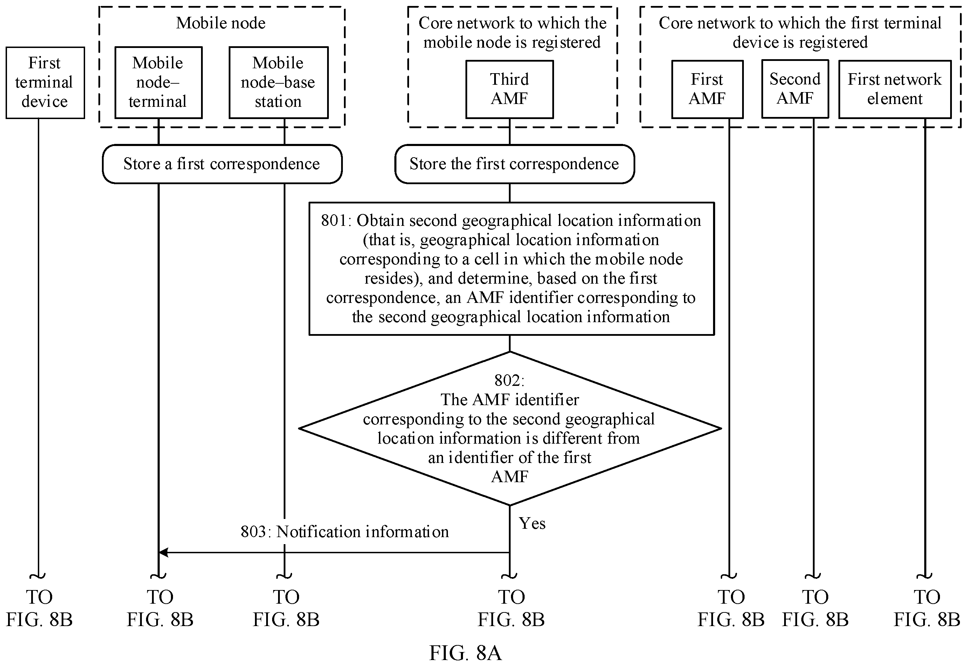

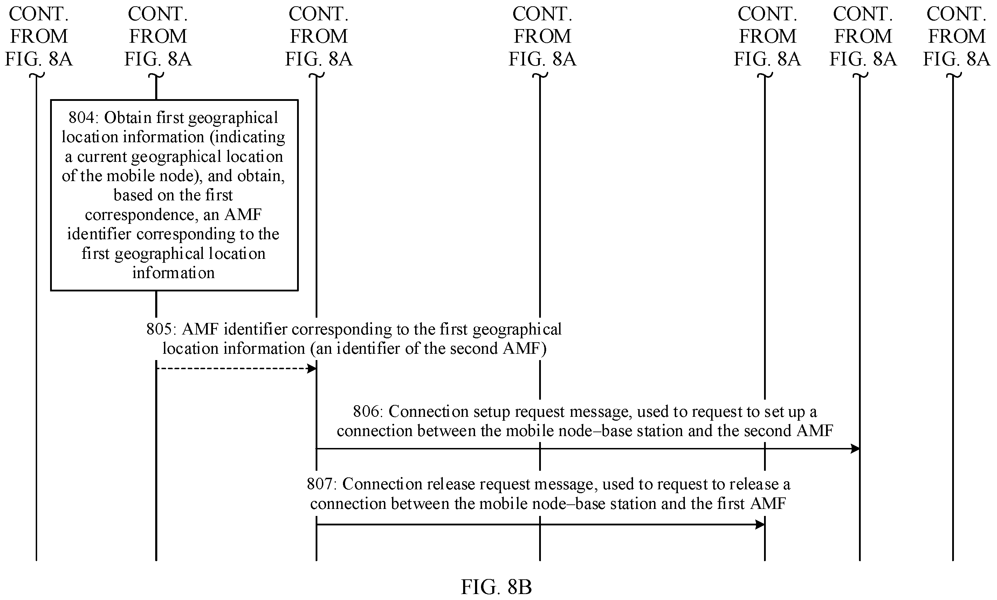

FIG. 8A and FIG. 8B are a schematic flowchart of a mobility management method according to an embodiment of this application. In the method, a mobile node-terminal has been registered to a third AMF, and the third AMF is an AMF serving the mobile node-terminal. A first session has been set up between the mobile node-terminal and a UPF (not shown in the figure) in a core network to which the mobile node is registered. A first connection has been set up between a mobile node-base station and a first AMF. The mobile node-base station may provide a network access service for a first terminal device. A first terminal device that has accessed may communicate with the first AMF based on the first connection. In other words, the first AMF may be configured to serve a first terminal device accessing the mobile node-base station. The first session is a backhaul link for the first connection.

A mobile node and the third AMF store a first correspondence. For a manner in which the mobile node and the third AMF obtain the first correspondence and content included in the first correspondence, refer to the related content in the foregoing embodiment.

As shown in FIG. 8A and FIG. 8B, the procedure may include the following steps.

Step 801: The third AMF obtains second geographical location information, and determines, based on the first correspondence, an AMF identifier corresponding to the second geographical location information. The second geographical location information is geographical location information corresponding to a cell in which the mobile node resides.

For a specific implementation in which the third AMF obtains the second geographical location information, refer to step 701 in FIG. 7A and FIG. 7B.

Step 802: If the third AMF determines that the AMF identifier corresponding to the second geographical location information is different from an identifier of the first AMF, step 803 is performed.

The first connection has been set up between the first AMF and the mobile node-base station.

In a possible implementation, the mobile node-base station stores context information related to the first AMF. The third AMF may obtain the context information related to the first AMF stored in the mobile node-base station, and compare the AMF identifier corresponding to the second geographical location information with the identifier of the first AMF.

Step 803: The third AMF sends notification information to the mobile node (for example, the mobile node-terminal or the mobile node-base station), where the notification information indicates or prompts the mobile node-base station to update an AMF serving the first terminal device accessing the mobile node.

In a possible implementation, the notification information may also be understood as being used to trigger the mobile node to obtain current geographical location information, so as to trigger the mobile node to update, based on obtained first geographical location information, the AMF connected to the mobile node-base station.

In a possible implementation, the third AMF sends first notification information to the mobile node-base station, where the first notification information indicates or prompts the mobile node-base station to update the AMF serving the first terminal device accessing the mobile node; and the mobile node-base station may send second notification information to the mobile node-terminal through an internal interface between the mobile node-base station and the mobile node-terminal, where the second notification information indicates or prompts the mobile node-terminal to obtain the current geographical location information, and obtain, based on the first correspondence, the AMF identifier corresponding to the current geographical location information.

It should be understood that the information exchange manner between the mobile node-terminal and the mobile node-base station may alternatively be another manner, for example, a memory sharing manner. This is not limited in this application.

Step 804: The mobile node (mobile node-terminal) obtains the first geographical location information, and obtains, based on the first correspondence, an AMF identifier corresponding to the first geographical location information. The first geographical location information indicates a current geographical location of the mobile node (mobile node-terminal).

For a specific implementation in which the mobile node-terminal obtains the first geographical location information, refer to step 704 in FIG. 7A and FIG. 7B.

In this procedure, an example in which the AMF identifier corresponding to the first geographical location information is an identifier of a second AMF is used for description.

Step 805: The mobile node (mobile node-base station) obtains, through a content interface or in another manner, the AMF identifier corresponding to the first geographical location information.

In a possible implementation, the mobile node-terminal may send, to the mobile node-base station through the internal interface between the mobile node-terminal and the mobile node-base station, the AMF identifier corresponding to the first geographical location information.

Optionally, before the mobile node-terminal sends the AMF identifier corresponding to the first geographical location information to the mobile node-base station, the mobile node-terminal may further determine whether the AMF identifier corresponding to the first geographical location information is the same as the identifier of the first AMF, and if the AMF identifier corresponding to the first geographical location information is different from the identifier of the first AMF, send the AMF identifier corresponding to the first geographical location information to the mobile node-base station.

It should be understood that the information exchange manner between the mobile node-terminal and the mobile node-base station may alternatively be another manner, for example, a memory sharing manner. This is not limited in this application.

In a possible implementation, after the mobile node-base station obtains the AMF identifier corresponding to the first geographical location information, if it is determined that the AMF identifier is different from the identifier of the first AMF, step 806 is performed.

Optionally, the mobile node-base station stores the context information related to the first AMF, and the mobile node-base station may compare the AMF identifier corresponding to the first geographical location information with the identifier of the first AMF.

Step 806: The mobile node-base station sends a connection setup request message to the second AMF based on the AMF identifier corresponding to the first geographical location information (the identifier of the second AMF in this procedure), where the connection setup request message requests to set up a connection between the mobile node-base station and the second AMF.

In a possible implementation, the mobile node-base station sends an NGAP setup request message to the second AMF, where the message requests to set up the connection between the mobile node-base station and the second AMF. Optionally, the second AMF may further send an NGAP setup response message to the mobile node-base station, where the message acknowledges connection setup.

Transmission can be performed, through the connection between the second AMF and the mobile node-base station, between the first terminal device accessing the mobile node-base station and the core network. The first session may be used as a backhaul link for the connection between the mobile node-base station and the second AMF.

In a possible implementation, the procedure shown in FIG. 8A and FIG. 8B may further include the following steps.

Step 807: The mobile node (mobile node-base station) sends a connection release request message to the first AMF, where the connection release request message requests to release a connection (namely, the first connection) between the mobile node-base station and the first AMF, so that resource overheads can be reduced.

In a possible implementation, the mobile node-base station sends an NGAP release request message or a RAN Configuration Update message to the first AMF, where the message requests to release the first connection. Optionally, the first AMF may further send an NGAP release response message or a RAN CONFIGURATION UPDATE ACKNOWLEDGE message to the mobile node-base station, where the message acknowledges connection release.

In a possible implementation, step 801 to step 804 in the procedure shown in FIG. 8A and FIG. 8B may be omitted. Correspondingly, in step 805, the mobile node-terminal may trigger to obtain the geographical location information of the mobile node-terminal in another manner. For example, the geographical location information of the mobile node-terminal is obtained by periodically initiating a positioning procedure, or the geographical location information of the mobile node-terminal is obtained by periodically using a GNSS of the mobile node-terminal. This is not limited in this application. Correspondingly, the third AMF may not need to store the first correspondence.

In a possible implementation, the mobile node (for example, the mobile node-terminal) may obtain the first correspondence from the first network element based on a specified period, and update the locally stored first correspondence in a timely manner. Further, the mobile node may further send the updated first correspondence to the AMF serving the mobile node.

In another possible implementation, the AMF serving the mobile node may obtain the first correspondence from the first network element based on a specified period, and update the locally stored first correspondence in a timely manner. Further, the AMF may further send the updated first correspondence to the mobile node.

In still another possible implementation, the mobile node (for example, the mobile node-terminal) may obtain the first correspondence from the first network element when the stored first correspondence cannot cover a current geographical location of the mobile node.

Based on the procedure shown in FIG. 8A and FIG. 8B, in a possible scenario, an AMF (the first AMF) serving the first terminal device accessing the mobile node and an AMF (the third AMF) serving the mobile node are located in a same PLMN. In another possible scenario, an AMF (the first AMF) serving the first terminal device accessing the mobile node and an AMF (the third AMF) serving the mobile node are located in different PLMNs.

Based on the procedure shown in FIG. 8A and FIG. 8B, the mobile node may query the first correspondence based on the current geographical location information, to obtain the corresponding AMF identifier, and set up a connection between the mobile node-base station and the AMF based on the AMF identifier, so that a connection between the mobile node and a core network can be updated in a timely manner based on a current location of the mobile node, to ensure that a transmission service is provided for a terminal device (for example, a first terminal device) accessing the mobile node. In this way, the terminal device (for example, the first terminal device) accessing a network via the mobile node performs procedures such as AMF reallocation (AMF reallocation), thereby implementing mobility management.

Further, after determining that the cell in which the mobile node resides changes, the AMF (for example, the third AMF) serving the mobile node may trigger the mobile node to determine, based on the current geographical location information and the first correspondence, the AMF corresponding to the current geographical location information. Compared with that the mobile node periodically performs the positioning procedure to obtain the current geographical location information, this can reduce positioning costs of the mobile node, reduce signaling overheads, and reduce power consumption.

It should be understood that the procedure shown in FIG. 7A and FIG. 7B may be combined with the procedure shown in FIG. 8A and FIG. 8B. In other words, the mobile node may update, in a timely manner based on the current geographical location, information (for example, including a cell identifier and/or a tracking area identity) broadcast by the mobile node, to implement mobility management. In addition, the mobile node may set up a connection to an AMF that matches the current location in a timely manner, to better ensure transmission between the terminal device accessing the mobile node and the core network.

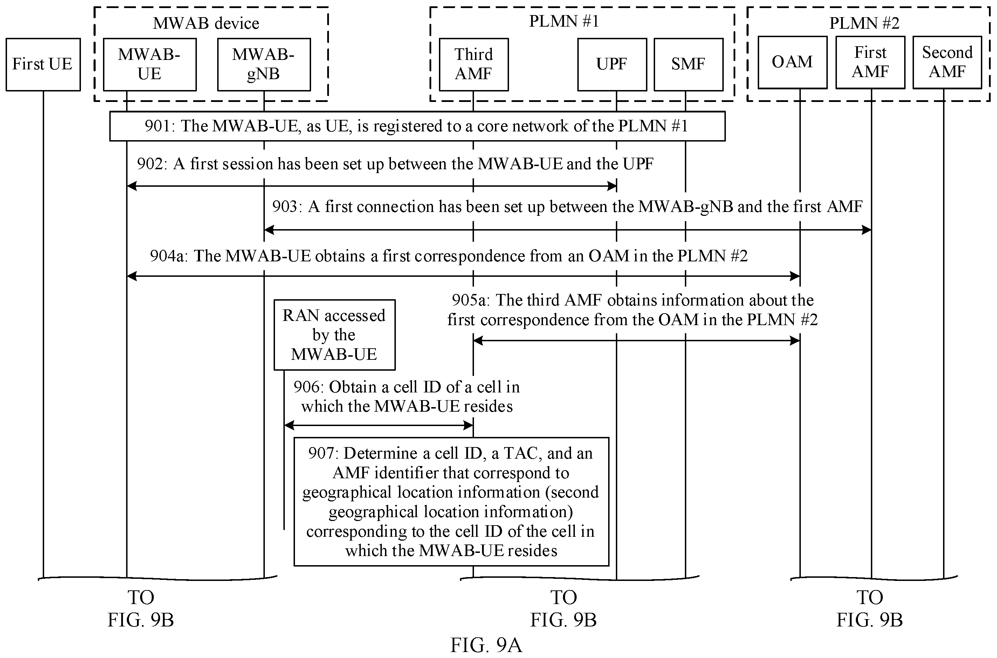

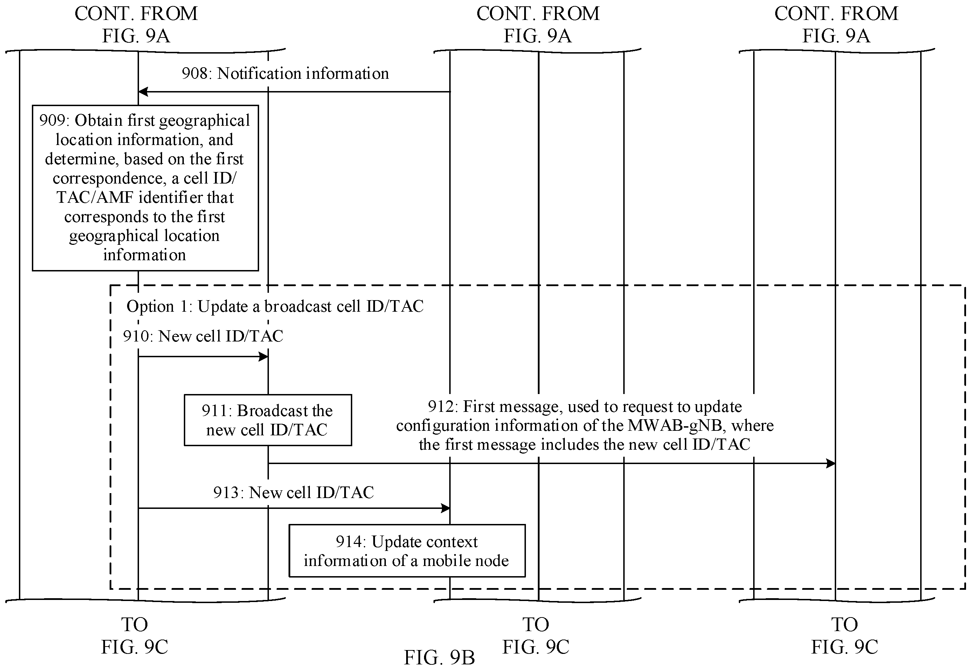

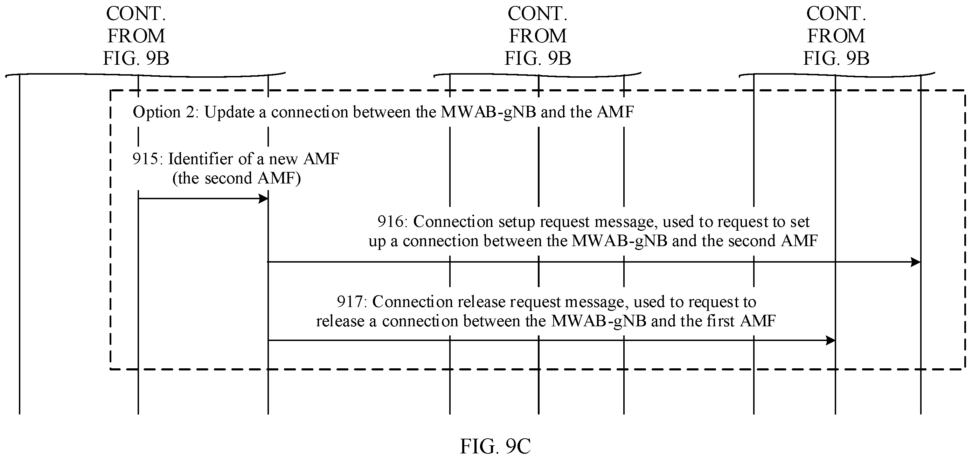

An example in which the mobile node is an MWAB device is used. FIG. 9A to FIG. 9C are a schematic flowchart of mobility management. The procedure is an example of the procedure shown in FIG. 7A and FIG. 7B and/or FIG. 8A and FIG. 8B. This procedure is described by using an example in which an AMF (a first AMF) serving first UE (namely, UE accessing a network via the MWAB device) and an AMF (a third AMF) serving the MWAB are located in different PLMNs. Specifically, a core network to which MWAB-UE is registered belongs to a PLMN #1, a core network to which the first UE is registered belongs to a PLMN #2, and a first connection has been set up between an MWAB-gNB and the first AMF in the PLMN #2.

As shown in FIG. 9A to FIG. 9C, the procedure may include the following steps.

Step 901: The MWAB-UE, as UE, is registered to the core network of the PLMN #1.

A registration procedure of the MWAB-UE is not limited in embodiments of this application.

Step 902: A first session has been set up between the MWAB-UE and a UPF in the PLMN #1.

A procedure of setting up the first session is not limited in embodiments of this application.

Step 903: A first connection has been set up between the MWAB-gNB and the first AMF in the PLMN #2.

Optionally, after the first UE accesses a network based on a cell ID broadcast by the MWAB-gNB, the MWAB-gNB initiates a process of setting up the first connection to the first AMF in the PLMN #2 for the first UE.

In a possible implementation, the MWAB-gNB sends a connection setup request message to the first AMF, where the connection setup request message requests to set up a connection between the MWAB-gNB and the first AMF. Optionally, the first AMF may further send a connection setup response message to the MWAB-gNB.

Optionally, the connection setup request message may be an NG setup request message, and the message includes information such as the cell identifier ID and a TAC that are broadcast by the MWAB-gNB.

Optionally, the connection setup response message may be an NG setup response message, and the message acknowledges that the connection between the MWAB-gNB and the first AMF has been set up.

Step 904a: The MWAB-UE obtains a first correspondence from an OAM in the PLMN #2.

In a possible implementation, after the MWAB-UE sends a registration request message to the third AMF, the third AMF may send, to the MWAB-gNB, necessary information used for access, where the necessary information includes address information of the OAM. The MWAB-gNB may send the address information of the OAM to the MWAB-UE through an interface between the MWAB-gNB and the MWAB-UE. The MWAB-UE may interact with the OAM in the PLMN #2 through the first session, and obtain the first correspondence from the OAM.

Step 905a: The third AMF obtains the first correspondence from the OAM in the PLMN #2.

In a possible implementation, the third AMF obtains the first correspondence from the OAM in the PLMN #2 based on the address information of the OAM.

Step 906: The third AMF obtains, from a RAN currently serving the MWAB-UE, a cell ID of a cell in which the MWAB-UE resides.

Step 907: The third AMF queries the first correspondence based on geographical location information (namely, second geographical location information) corresponding to the cell ID of the cell in which the MWAB-UE resides, to obtain a corresponding cell ID, TAC, and AMF identifier.

Because the MWAB device has mobility, as the MWAB device moves, the MWAB-UE may be handed over between different RANs. In other words, the cell in which the MWAB-UE resides changes, and the cell ID and/or the TAC that are/is broadcast by the MWAB-gNB need/needs to be updated in a timely manner based on a current geographical location of the MWAB-UE, so as to provide an access service for a surrounding terminal device. When the MWAB-UE moves out of a geographical location area corresponding to the first AMF, the MWAB-gNB needs to set up a connection to a new AMF in a timely manner, to ensure that a terminal device that has accessed can perform data transmission with the core network.

In this procedure, an example in which the queried cell ID is different from the cell ID broadcast by the MWAB-gNB, the queried TAC is different from the TAC broadcast by the MWAB-gNB, and the queried AMF identifier is different from an identifier of the first AMF is used for description.

Step 908: The third AMF sends notification information to the MWAB-UE, where the notification information triggers the MWAB-UE to obtain the current geographical location.

Step 909: The MWAB-UE obtains first geographical location information, where the first geographical location information is geographical location information of a current location of the MWAB-UE. The MWAB-UE queries the first correspondence based on the first geographical location information, to obtain a cell ID, a TAC, and an AMF identifier that correspond to the first geographical location information.

For a specific implementation in which the MWAB-UE obtains the first geographical location information, refer to the related content in FIG. 7A and FIG. 7B.

If the MWAB-UE determines that the queried cell ID is different from the cell ID broadcast by the MWAB-gNB, and/or the queried TAC is different from the TAC broadcast by the MWAB-gNB, an option 1 is performed, to update information broadcast by the MWAB-gNB.

The option 1 includes the following steps:
Step 910: The MWAB-UE sends, to the MWAB-gNB through an interface between the MWAB-UE and the MWAB-gNB, the cell ID and/or the TAC (referred to as a new cell ID and/or a new TAC herein) that correspond/corresponds to the first geographical location information.

Step 911: The MWAB-gNB updates the broadcast information, where the updated information includes the new cell ID and/or the new TAC.

For a specific implementation of this step, refer to the related content in FIG. 7A and FIG. 7B.

Step 912: The MWAB-gNB sends a first message to the first AMF, where the first message includes the new cell ID and/or the new TAC, and the first message requests to update configuration information of the MWAB-gNB.

For a specific implementation of this step, refer to the related content in FIG. 7A and FIG. 7B.

Step 913: Optionally, the MWAB-UE (or the MWAB-gNB) may further send the new cell ID and/or the new TAC to the third AMF.

Step 914: The third AMF updates context information of the MWAB-UE based on the new cell ID and/or the new TAC.

If the MWAB-UE determines that the queried AMF identifier is different from the identifier of the first AMF, an option 2 is performed, to set up the connection to the new AMF.

The option 2 includes the following steps:
Step 915: The MWAB-UE sends, to the MWAB-gNB through an interface between the MWAB-UE and the MWAB-gNB, the AMF identifier (an identifier of a second AMF is used as an example herein) corresponding to the first geographical location information.

Step 916: The MWAB-gNB sends a connection setup request message to the second AMF based on the identifier of the second AMF, where the connection setup request message requests to set up a connection between the MWAB-gNB and the second AMF.

For a specific implementation of this step, refer to step 808 in FIG. 8A and FIG. 8B.

Step 917: The MWAB-gNB sends a connection release request message to the first AMF, where the connection release request message requests to release a connection between the MWAB-gNB and the first AMF.

For a specific implementation of this step, refer to step 809 in FIG. 8A and FIG. 8B.

In a possible implementation, if the MWAB-UE determines that the queried cell ID is different from the cell ID broadcast by the MWAB-gNB, the queried TAC is different from the TAC broadcast by the MWAB-gNB, and the queried AMF identifier is different from the identifier of the first AMF, the MWAB-UE may send the queried cell ID, TAC, and AMF identifier to the MWAB-gNB through the interface between the MWAB-UE and the MWAB-gNB. In other words, step 910 and step 915 may be combined into one step.

It should be understood that a time sequence relationship of steps in the procedure shown in FIG. 9A to FIG. 9C is merely a possible example. This is not limited in this application.

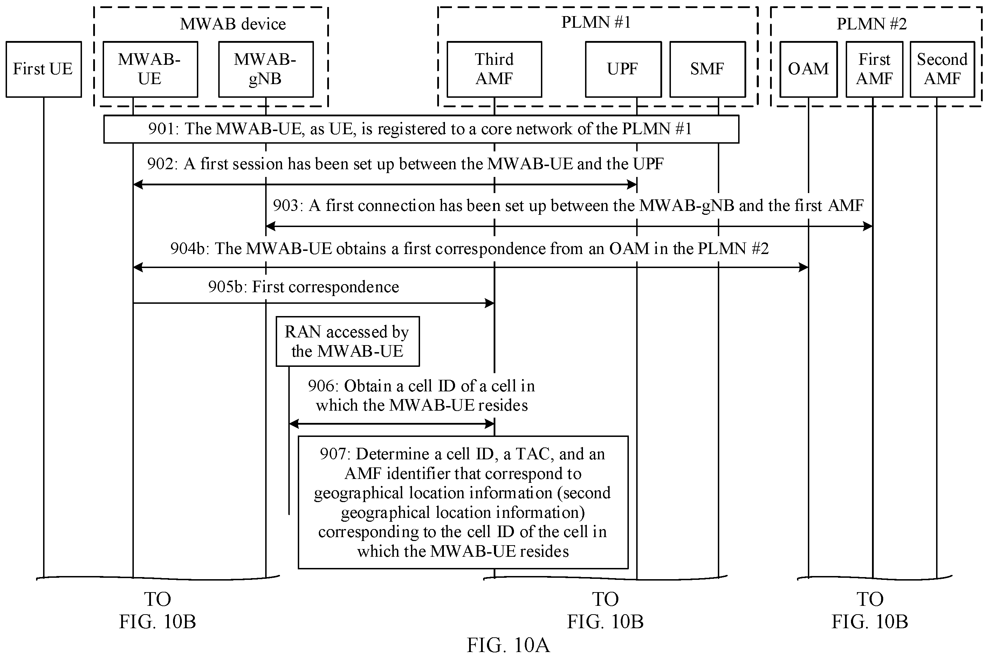

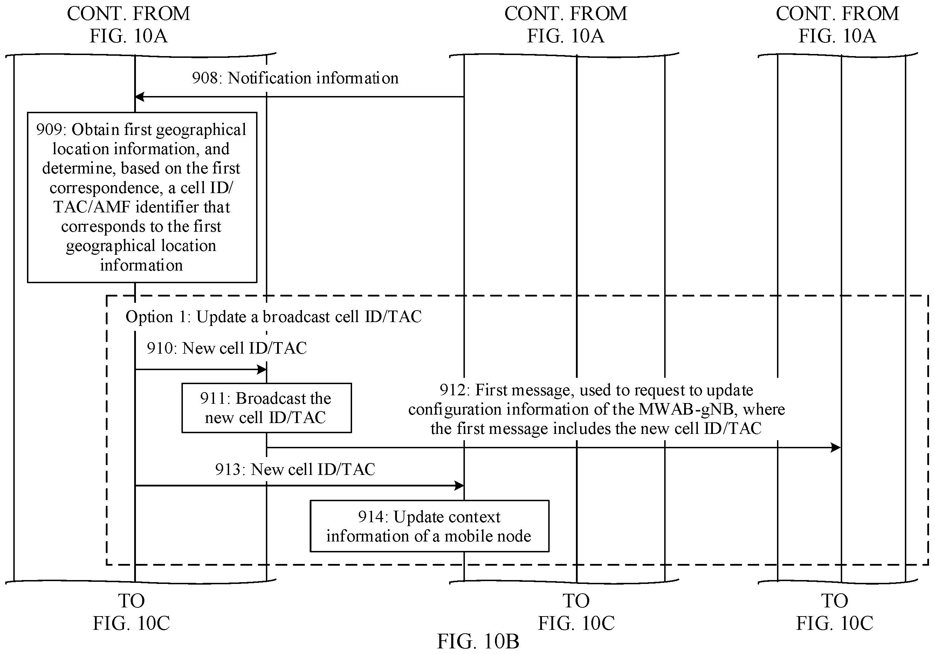

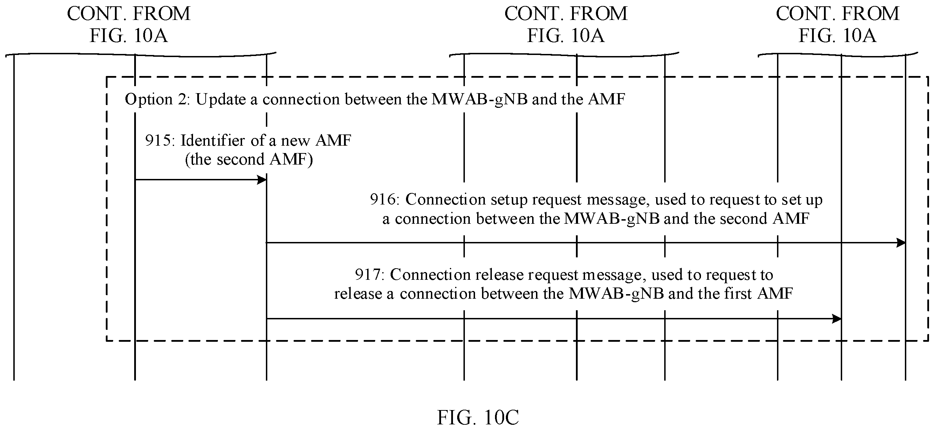

FIG. 10A to FIG. 10C are a schematic flowchart of another mobility management method according to an embodiment of this application. In FIG. 10A to FIG. 10C, except for a manner in which a third AMF obtains a first correspondence is different from the procedure shown in FIG. 9A to FIG. 9C, for an implementation of another step, refer to the procedure shown in FIG. 9A to FIG. 9C. In a procedure shown in FIG. 10A to FIG. 10C, MWAB-UE may provide the first correspondence for the AMF. Specifically, in step 904b, the MWAB-UE obtains the first correspondence from an OAM in a PLMN #2, and in step 905b, the MWAB-UE sends the first correspondence to the third AMF. This implementation does not require function enhancement of the AMF, and implementation complexity can be reduced.

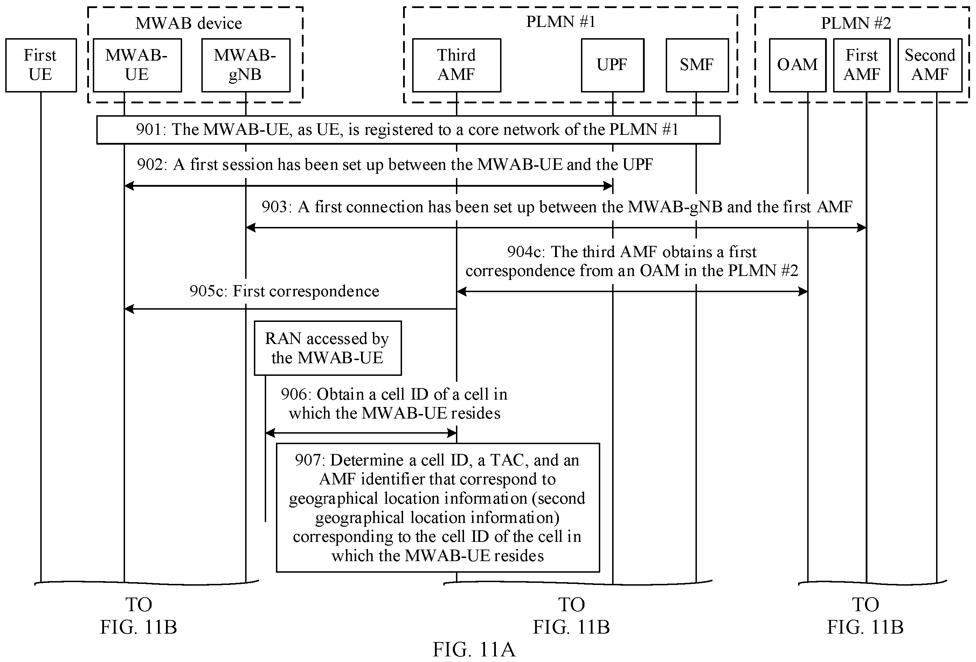

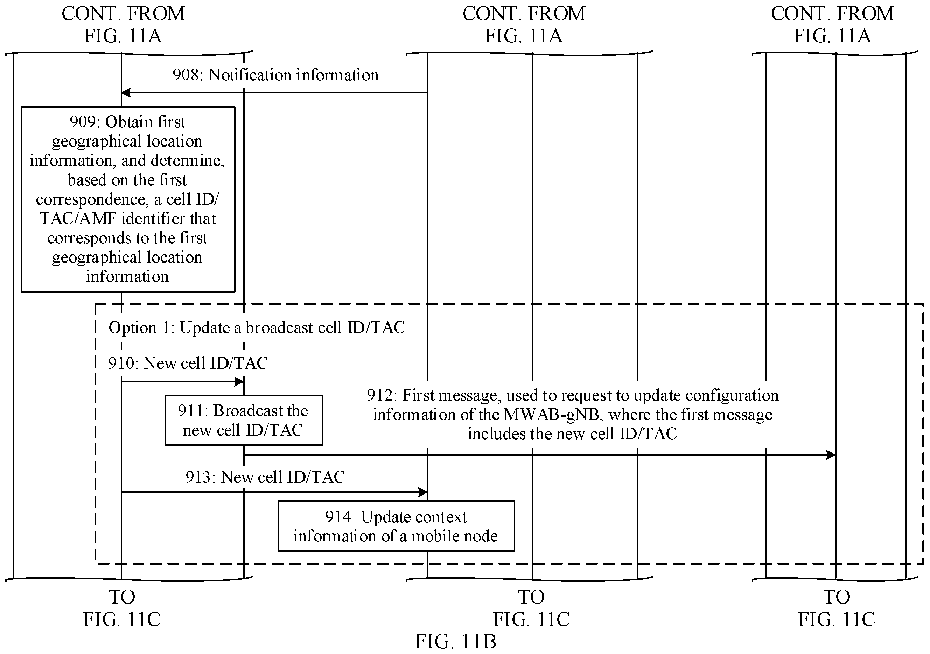

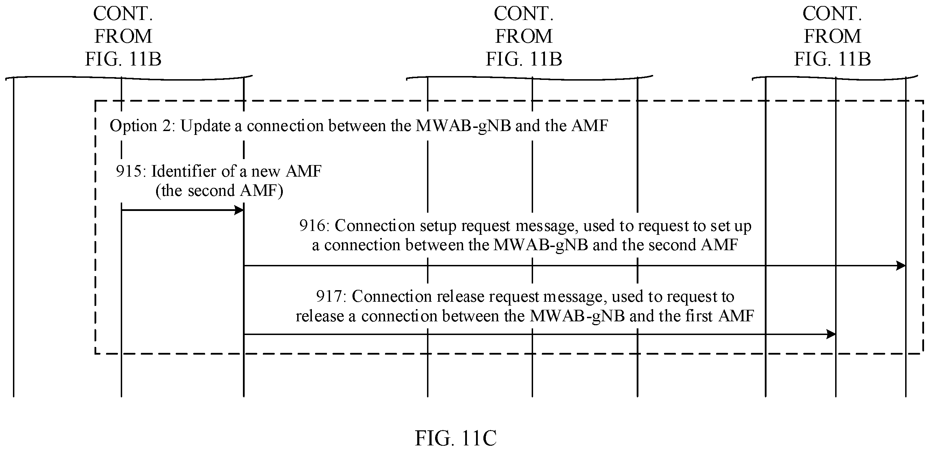

FIG. 11A to FIG. 11C are a schematic flowchart of another mobility management method according to an embodiment of this application. In FIG. 11A to FIG. 11C, except for a manner in which MWAB-UE obtains a first correspondence is different from the procedure shown in FIG. 9A to FIG. 9C, for an implementation of another step, refer to the procedure shown in FIG. 9A to FIG. 9C. In a procedure shown in FIG. 11A to FIG. 11C, AMF may provide the first correspondence for the MWAB-UE. Specifically, in step 904c, the third AMF obtains the first correspondence from an OAM in a PLMN #2, and in step 905c, the third AMF sends the first correspondence to the MWAB-UE.

It may be understood that, to implement the functions in the foregoing embodiments, a network device and a terminal device include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

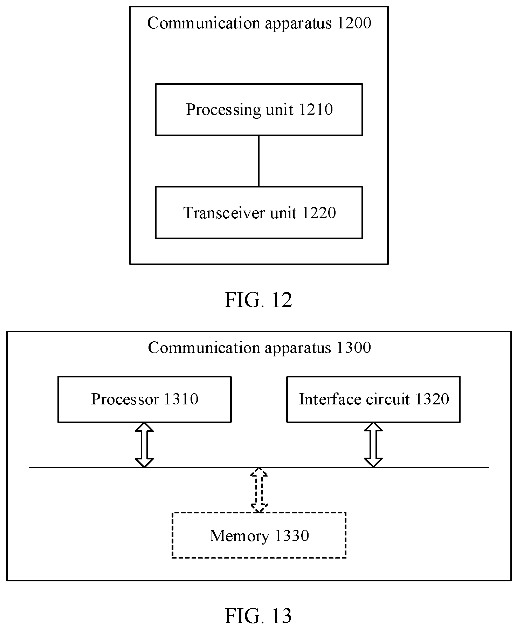

FIG. 12 and FIG. 13 are diagrams of structures of possible communication apparatuses according to embodiments of this application. These communication apparatuses may be configured to implement functions of the mobile node, the AMF, or the SMF in the foregoing method embodiments, and therefore can also implement beneficial effects of the foregoing method embodiments. In embodiments of this application, the communication apparatus may be the foregoing device or a module (for example, a chip) in the foregoing device.

As shown in FIG. 12, a communication apparatus 1200 includes a processing unit 1210 and a transceiver unit 1220. The communication apparatus 1200 is configured to implement a function of the mobile node or the AMF in the method embodiment shown in any one of FIG. 7A and FIG. 7B to FIG. 11A to FIG. 11C.

When the communication apparatus 1200 is configured to implement the function of the mobile node in the method embodiment shown in FIG. 7A and FIG. 7B, the processing unit 1210 is configured to: obtain first geographical location information, where the first geographical location information indicates a current geographical location of a mobile node; obtain, based on the first geographical location information and a first correspondence, a cell identifier and/or a tracking area identity that correspond/corresponds to the first geographical location information, where the first correspondence includes a correspondence between a cell identifier and geographical location information and/or includes a correspondence between a tracking area identity and the geographical location information; and broadcast the cell identifier and/or the tracking area identity that correspond/corresponds to the first geographical location information.

When the communication apparatus 1200 is configured to implement the function of the AMF in the method embodiment shown in FIG. 7A and FIG. 7B, the processing unit 1210 is configured to: obtain second geographical location information, where the second geographical location information is geographical location information corresponding to a cell in which a mobile node resides, a third AMF is an AMF serving the mobile node, and the mobile node provides a wireless access service for a terminal device; determine, based on the second geographical location information and a first correspondence, a cell identifier and/or a tracking area identity that correspond/corresponds to the second geographical location information, where the first correspondence includes a correspondence between a cell identifier and geographical location information and/or includes a correspondence between a tracking area identity and the geographical location information; and if the cell identifier corresponding to the second geographical location information is different from a cell identifier broadcast by the mobile node, indicate the mobile node to update the broadcast cell identifier; or if the tracking area identity corresponding to the second geographical location information is different from a tracking area identity broadcast by the mobile node, indicate the mobile node to update the broadcast tracking area identity.

When the communication apparatus 1200 is configured to implement the function of the mobile node in the method embodiment shown in FIG. 8A and FIG. 8B, the processing unit 1210 is configured to: obtain second geographical location information, where the second geographical location information is geographical location information corresponding to a cell in which the mobile node resides, obtain, based on the first geographical location information and a first correspondence, an AMF identifier corresponding to the first geographical location information, where the first correspondence includes a correspondence between an AMF identifier and geographical location information; and if the AMF identifier indicates a second AMF, a first connection has been set up between the mobile node and a first AMF, and the second AMF is different from the first AMF, send, via the transceiver unit 1220, a connection setup request message to the second AMF, where the connection setup request message requests to set up a connection between the mobile node and the second AMF, and the first AMF serves a terminal device accessing the mobile node.

When the communication apparatus 1200 is configured to implement the function of the AMF in the method embodiment shown in FIG. 8A and FIG. 8B, the processing unit 1210 is configured to: obtain second geographical location information, where the second geographical location information is geographical location information corresponding to a cell in which a mobile node resides, the third AMF is an AMF serving the mobile node, and the mobile node provides a wireless access service for a terminal device; and determine, based on the second geographical location information and a first correspondence, an AMF identifier corresponding to the second geographical location information, where the first correspondence includes a correspondence between an access and mobility management function AMF identifier and geographical location information; and if the AMF identifier corresponding to the second geographical location information is different from an identifier of a first AMF, the third AMF indicates, via the transceiver unit 1220, the mobile node to update an AMF, where the first AMF serves a terminal device accessing the mobile node.

For more detailed descriptions about the processing unit 1210 and the transceiver unit 1220, directly refer to the related descriptions in the foregoing method embodiments. Details are not described herein again.

As shown in FIG. 13, a communication apparatus 1300 includes a processor 1310 and an interface circuit 1320. The processor 1310 and the interface circuit 1320 are coupled to each other. It may be understood that the interface circuit 1320 may be a transceiver or an input/output interface. Optionally, the communication apparatus 1300 may further include a memory 1330, configured to store instructions executed by the processor 1310, store input data required by the processor 1310 to run the instructions, or store data generated after the processor 1310 runs the instructions.

When the communication apparatus 1300 is configured to implement the methods shown in the accompanying drawings, the processor 1310 is configured to implement a function of the foregoing processing unit 1210, and the interface circuit 1320 is configured to implement a function of the foregoing transceiver unit 1220.

When the communication apparatus is a chip used in the device, the chip implements the function of the corresponding device in the foregoing method embodiment. The chip receives information from another module (for example, a radio frequency module or an antenna) in the device, where the information is sent by another device to the device; or the chip sends information to another module (for example, a radio frequency module or an antenna) in the device.

When the communication apparatus is a module applied to a mobile node, the module implements a function of the mobile node in the foregoing method embodiment. The module receives information from another module (for example, a radio frequency module or an antenna), where the information is sent by a terminal to the device; or the module sends information to another module (for example, a radio frequency module or an antenna) in the device, where the information is sent by the device to a terminal. The module herein may be a baseband chip in the device, or may be a DU or another module. The DU herein may be a DU in an open radio access network (open radio access network, O-RAN) architecture.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

This application provides another example of a communication apparatus. The communication apparatus includes at least one processor and at least one memory. The at least one processor is coupled to the at least one memory. The at least one memory is configured to store instructions. When the instructions are executed by the at least one processor, the communication apparatus is caused to perform the method in the foregoing embodiments. For example, the communication apparatus includes a processor and a memory. As shown in FIG. 13, the communication apparatus 1300 includes a processor 1310 and a memory 1330. The processor 1310 is coupled to the memory 1330. The memory 1330 stores instructions. When the instructions stored in the memory 1330 are executed by the processor 1310, the communication apparatus 1300 performs the method performed by the terminal device or the network device in the foregoing embodiments.

It should be understood that the processor 1310 and the memory 1330 may alternatively be integrated together, for example, integrated into one chip.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in the network device or the terminal. Alternatively, the processor and the storage medium may exist in a network device or a terminal as discrete components.

All or a part of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

In this application, at least one means one or more, and a plurality of means two or more. In addition, "and/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A mobility management method, applied to a mobile node, wherein the mobile node provides a wireless access service for a terminal device, and the method comprises:
obtaining first geographical location information, wherein the first geographical location information indicates a current geographical location of the mobile node;
obtaining, based on the first geographical location information and a first correspondence, a cell identifier and/or a tracking area identity that correspond/corresponds to the first geographical location information, wherein the first correspondence comprises a correspondence between a cell identifier and geographical location information and/or comprises a correspondence between a tracking area identity and the geographical location information; and
broadcasting the cell identifier and/or the tracking area identity that correspond/corresponds to the first geographical location information.

2. The method according to claim 1, wherein broadcasting the cell identifier and/or the tracking area identity that correspond/corresponds to the first geographical location information comprises:
if the cell identifier corresponding to the first geographical location information is different from a cell identifier broadcast by the mobile node, updating, based on the cell identifier corresponding to the first geographical location information, the cell identifier broadcast by the mobile node; and/or
if the tracking area identity corresponding to the first geographical location information is different from a tracking area identity broadcast by the mobile node, updating, based on the tracking area identity corresponding to the first geographical location information, the tracking area identity broadcast by the mobile node.

3. The method according to claim 1, further comprising:
sending a first message to a first access and mobility management function AMF, wherein the first message comprises the cell identifier and/or the tracking area identity that correspond/corresponds to the first geographical location information, the first message requests to update configuration information of the mobile node, and the first AMF serves a terminal device accessing the mobile node.

4. The method according to any one of claims 1 to 3, wherein the first correspondence further comprises a correspondence between an AMF identifier and the geographical location information, and the method further comprises:
obtaining, based on the first geographical location information and the first correspondence, an AMF identifier corresponding to the first geographical location information; and
if the AMF identifier indicates a second AMF, a first connection has been set up between the mobile node and the first AMF, and the second AMF is different from the first AMF, sending a connection setup request message to the second AMF, wherein the connection setup request message requests to set up a connection between the mobile node and the second AMF, and the first AMF serves the terminal device accessing the mobile node.

5. The method according to claim 4, further comprising:
sending a connection release request message to the first AMF, wherein the connection release request message requests to release a connection between the mobile node and the first AMF.

6. The method according to any one of claims 1 to 5, further comprising:
obtaining the first correspondence from a first network element, wherein the first network element stores the first correspondence; or
obtaining the first correspondence from a third AMF, wherein the third AMF is an AMF serving the mobile node.

7. The method according to claim 6, wherein after obtaining the first correspondence from the first network element, the method further comprises:
sending the first correspondence to the third AMF.

8. The method according to claim 6 or 7, further comprising:
receiving address information of the first network element, wherein the address information of the first network element is from a second network element in a network to which the mobile node is registered; and
obtaining the first correspondence from the first network element comprises:
obtaining the first correspondence from the first network element based on the address information of the first network element.

9. The method according to any one of claims 1 to 8, wherein obtaining the first geographical location information comprises:
receiving notification information from the third AMF, wherein the notification information indicates the mobile node to update the broadcast cell identifier and/or the broadcast tracking area identity, and the third AMF is an AMF serving the mobile node; and
obtaining the first geographical location information based on the notification information.

10. The method according to any one of claims 1 to 8, wherein obtaining the first geographical location information comprises:
obtaining the first geographical location information based on a periodically initiated procedure for positioning the mobile node.

11. A mobility management method, comprising:
obtaining, by a third access and mobility management function AMF, second geographical location information, wherein the second geographical location information is geographical location information corresponding to a cell in which a mobile node resides, the third AMF is an AMF serving the mobile node, and the mobile node provides a wireless access service for a terminal device;
determining, by the third AMF based on the second geographical location information and a first correspondence, a cell identifier and/or a tracking area identity that correspond/corresponds to the second geographical location information, wherein the first correspondence comprises a correspondence between a cell identifier and geographical location information and/or comprises a correspondence between a tracking area identity and the geographical location information; and
if the cell identifier corresponding to the second geographical location information is different from a cell identifier broadcast by the mobile node, indicating the mobile node to update the broadcast cell identifier; or if the tracking area identity corresponding to the second geographical location information is different from a tracking area identity broadcast by the mobile node, indicating the mobile node to update the broadcast tracking area identity.

12. The method according to claim 11, wherein the first correspondence further comprises a correspondence between an AMF identifier and the geographical location information, and the method further comprises:
determining, by the third AMF based on the second geographical location information and the first correspondence, an AMF identifier corresponding to the second geographical location information; and
if the AMF identifier corresponding to the second geographical location information is different from an identifier of a first AMF, indicating, by the third AMF, the mobile node to update an AMF, wherein the first AMF serves a terminal device accessing the mobile node.

13. The method according to claim 11 or 12, wherein obtaining, by the third AMF, the second geographical location information comprises:
obtaining, by the third AMF from a first radio access network device, an identifier of the cell in which the mobile node resides, wherein the first radio access network device is a radio access network device serving the mobile node; and
determining, by the third AMF, the geographical location information corresponding to the identifier of the cell in which the mobile node resides.

14. The method according to any one of claims 11 to 13, further comprising:
obtaining, by the third AMF, the first correspondence from the mobile node.

15. The method according to any one of claims 11 to 13, further comprising:
sending, by the third AMF, the first correspondence to the mobile node; or
sending, by the third AMF, address information of a first network element to the mobile node, wherein the first network element stores the first correspondence.

16. A mobility management method, applied to a mobile node, wherein the mobile node provides a wireless access service for a terminal device, and the method comprises:
obtaining first geographical location information, wherein the first geographical location information indicates a current geographical location of the mobile node;
obtaining, based on the first geographical location information and a first correspondence, an access and mobility management AMF identifier corresponding to the first geographical location information, wherein the first correspondence comprises a correspondence between an AMF identifier and geographical location information; and
if the AMF identifier indicates a second AMF, a first connection has been set up between the mobile node and a first AMF, and the second AMF is different from the first AMF, sending a connection setup request message to the second AMF, wherein the connection setup request message requests to set up a connection between the mobile node and the second AMF, and the first AMF serves a terminal device accessing the mobile node.

17. The method according to claim 16, wherein the method further comprises:
sending a connection release request message to the first AMF, wherein the connection release request message requests to release a connection between the mobile node and the first AMF.

18. The method according to claim 16 or 17, further comprising:
obtaining the first correspondence from a first network element, wherein the first network element stores the first correspondence; or
obtaining the first correspondence from a third AMF, wherein the third AMF is an AMF serving the mobile node.

19. The method according to claim 18, wherein after obtaining the first correspondence from the first network element, the method further comprises:
sending the first correspondence to the third AMF.

20. The method according to claim 18 or 19, further comprising:
receiving address information of the first network element, wherein the address information of the first network element is from a second network element in a network to which the mobile node is registered; and
obtaining the first correspondence from the first network element comprises:
obtaining the first correspondence from the first network element based on the address information of the first network element.

21. The method according to any one of claims 16 to 20, wherein obtaining the first geographical location information comprises:
receiving notification information from the third AMF, wherein the notification information indicates the mobile node to update an AMF, and the third AMF is an AMF serving the mobile node; and
obtaining the first geographical location information based on the notification information.

22. The method according to any one of claims 16 to 21, wherein obtaining the first geographical location information comprises:
obtaining the first geographical location information based on a periodically initiated procedure for positioning the mobile node.

23. A mobility management method, comprising:
obtaining, by a third access and mobility management function AMF, second geographical location information, wherein the second geographical location information is geographical location information corresponding to a cell in which a mobile node resides, the third AMF is an AMF serving the mobile node, and the mobile node provides a wireless access service for a terminal device;
determining, by the third AMF based on the second geographical location information and a first correspondence, an AMF identifier corresponding to the second geographical location information, wherein the first correspondence comprises a correspondence between an access and mobility management function AMF identifier and geographical location information; and
if the AMF identifier corresponding to the second geographical location information is different from an identifier of a first AMF, indicating, by the third AMF, the mobile node to update an AMF, wherein the first AMF serves a terminal device accessing the mobile node.

24. The method according to claim 23, wherein obtaining, by the third AMF, the second geographical location information comprises:
obtaining, by the third AMF from a first radio access network device, an identifier of the cell in which the mobile node resides, wherein the first radio access network device is a radio access network device serving the mobile node; and
determining, by the third AMF, the geographical location information corresponding to the identifier of the cell in which the mobile node resides.

25. The method according to claim 23 or 24, further comprising:
obtaining, by the third AMF, the first correspondence from the mobile node.

26. The method according to claim 23 or 24, further comprising:
sending, by the third AMF, the first correspondence to the mobile node; or
sending, by the third AMF, address information of a first network element to the mobile node, wherein the first network element stores the first correspondence.

27. A communication system, comprising a mobile node and an access and mobility management function AMF, wherein the mobile node is configured to implement the method according to any one of claims 1 to 10, and the AMF is configured to implement the method according to any one of claims 11 to 15; or the mobile node is configured to implement the method according to any one of claims 16 to 22, and the AMF is configured to implement the method according to any one of claims 23 to 26.

28. A communication apparatus, comprising a unit or a module configured to perform the method according to any one of claims 1 to 10, or comprising a unit or a module configured to perform the method according to any one of claims 11 to 15, or comprising a unit or a module configured to perform the method according to any one of claims 16 to 22, or comprising a unit or a module configured to perform the method according to any one of claims 23 to 26.

29. A communication apparatus, comprising: one or more processors configured to perform the method according to any one of claims 1 to 10, or perform the method according to any one of claims 11 to 15, or perform the method according to any one of claims 16 to 22, or perform the method according to any one of claims 23 to 26.

30. A readable storage medium, wherein the readable storage medium stores a program, and when the program is executed by a communication apparatus, the method according to any one of claims 1 to 10, or the method according to any one of claims 11 to 15, or the method according to any one of claims 16 to 22, or the method according to any one of claims 23 to 26 is implemented.

31. A chip system, comprising: a memory configured to store a computer program, and a processor, wherein after the processor invokes the computer program from the memory and runs the computer program, a communication apparatus in which the chip system is installed is caused to perform the method according to any one of claims 1 to 10, or perform the method according to any one of claims 11 to 15, or perform the method according to any one of claims 16 to 22, or perform the method according to any one of claims 23 to 26.

32. A computer program product, wherein the computer program product comprises instructions, and when the instructions are run on a processor, the processor is caused to perform the method according to any one of claims 1 to 10, or perform the method according to any one of claims 11 to 15, or perform the method according to any one of claims 16 to 22, or perform the method according to any one of claims 23 to 26.
